# EUROPEAN PATENT SPECIFICATION

(11) **EP 4 088 998 B1**
(45) Date of publication and mention of the grant of the patent: **17.04.2024**
(21) Application number: 21745011.3
(22) Date of filing: 20.01.2021
(51) Int. Cl.: B62K 19/30, B62J 45/00, B62J 45/42, B62M 7/02, F02N 11/00

(54) **MANUAL-TRANSMISSION STRADDLED VEHICLE**
GRÄTSCHSITZFAHRZEUG MIT HANDSCHALTUNG
VÉHICULE À SELLE À TRANSMISSION MANUELLE

(30) Priority: 21.01.2020 WO PCT/JP2020/001913
(43) Date of publication of application: 16.11.2022
(73) Proprietor: Yamaha Hatsudoki Kabushiki Kaisha, Iwata-shi, Shizuoka 438-8501 (JP)
(72) Inventor: KATANO, Wataru, Iwata-shi, Shizuoka 438-8501 (JP)
(74) Representative: Stöckeler, Ferdinand
(86) International application number: PCT/JP2021/001815
(87) International publication number: WO 2021/149711

(56) References cited:
- WO-A1-2014/054204
- JP-A- 2002 295 349
- JP-A- 2005 104 244
- JP-A- 2006 151 189
- JP-A- 2017 081 327
- JP-A- 2017 208 899
- JP-A- 2018 511 513
- JP-A- 2019 089 492
- JP-A- 2019 152 146
- JP-A- 2019 155 944
- JP-A- 2019 171 995
- JP-A- 2019 183 659

## Description

### Technical Field

The present teaching relates to an MT (manual transmission)-type straddled vehicle.

### Background Art

An MT-type straddled vehicle having a manual transmission is disclosed, for example, in the Patent Literature 1. In the MT-type straddled vehicle in PTL1, various components and a frame are arranged in a region higher than a crankcase that houses a crankshaft and a manual transmission. More specifically, components such as a starter motor, a canister, a purge device, and a fresh air filter are arranged higher than the crankcase. The canister, the purge device, and the fresh air filter are arranged higher than the starter motor.

### Citation List

### Patent Literature

[Patent Literature 1] Japanese Unexamined Patent Publication No.2012-211553.

Document JP2019171995A shows the preamble of claim 1.

### Summary of Invention

### Technical Problem

In an MT-type straddled vehicle, a frame and many components related to functioning of an engine are arranged in a region higher than a crankcase. It is desired that higher flexibility in an arrangement of both the frame and such components be achieved while decline in functions of a starter motor be suppressed. It is an objective of the present teaching to provide an MT-type straddled vehicle where higher flexibility in the arrangement of both the frame and a component in a region higher than the crankcase can be achieved while decline in functions of the starter motor can be suppressed.

### Solution to the Problem

The present inventors have studied the arrangement of components in a region higher than a crankcase. A crankshaft and a transmission are housed in a crankcase of a vehicle disclosed in, for example, Patent Literature 1. In the crankcase, accordingly, the size of the crankshaft in the radial direction being housed is likely to be larger compared to, for example, the case where the continuously variable transmission provided at the end part of the crankshaft is housed. A starter motor and a chain tensioner are arranged in a region higher than the crankcase. In addition, a thermostat of a cooling system, a throttle valve, and the like may be arranged in the region described above. Consequently, in the region described above, positions of components are restricted, and there is limited space available for the components.

Accordingly, the present inventors have further studied the arrangement of components in the region higher than the crankcase. In particular, the present inventors have studied a function and an arrangement of the starter motor arranged in the region described above. The starter motor has a function for driving the crankshaft in order to start an engine. When a multiphase brushless motor that also serves as a power generator is provided as the starter motor at the end part of the crankshaft, the starter motor can be removed from the region described above while keeping its function. After the removal of the starter motor from the region described above, other components can be arranged in a space where the starter motor was originally arranged. This results in creation of more space in the region higher than the crankcase.

When a multiphase brushless motor that also serves as a power generator is employed as the starter motor, switching of the electric current that is to be supplied to the starter motor is performed by the motor driver. The motor driver also performs switching of the electric current generated by the starter motor. Accordingly, heat is generated in the motor driver while the vehicle is travelling.

In this case, the motor driver is provided to the two seat frames either directly or through a fixing member, in such a manner that the motor driver be fixed relative to the two seat frames, where the motor driver is included within a seat frame space. The seat frame space is within the two seat frames in view of the down direction of the MT-type straddled vehicle from above, and the seat frame space is formed where downward displacement of the seat can be accepted thereinto. The form of the seat of the MT-type straddled vehicle is changed when a driver is seated. A space is provided under the seat to accept thereinto the change of shape. As there is a space under the seat of the MT-type straddled vehicle, when the vehicle is traveling, the air does not remain and is free to flow. Accordingly, when the motor driver is arranged under the seat, heat of the motor driver can be radiated easily. Thus, higher flexibility can be achieved in the arrangement of components in the region higher than the crankcase while any decline in functions of the starter motor can be suppressed.

In order to achieve the above objective, according to one aspect of the present teaching, the MT-type straddled vehicle has the following configuration.
(1) An MT type straddled vehicle, the MT type straddled vehicle comprising:
   a frame including two seat frames;
   a seat supported by the two seat frames;
   a multi-stage transmission device configured to change a gear ratio in multiple stages in response to an operation;
   an engine including a crankshaft, a piston, a cylinder, and a crankcase, the crankshaft extending in a left-right direction of the MT type straddled vehicle, the cylinder having a cylinder bore in which the piston is reciprocably accommodated, the crankcase being connected to the cylinder and storing the crankshaft and the multi-stage transmission device, the engine being attached to the frame;
   a starter motor configured to start the engine;
      and
   a motor driver configured to perform switching of a current to be supplied to the starter motor;
   the starter motor being provided to one end portion of the crankshaft, the starter motor being a multi-phase brushless motor that serves also as a generator that generates electricity by being driven by the engine,
   the motor driver being provided to the two seat frames either directly or through a fixing member, in such a manner that the motor driver is fixed relative to the two seat frames, where at least a part of the motor driver is included within a seat frame space, the seat frame space being defined as a space within the two seat frames in view of the down direction of the MT type straddled vehicle, the seat frame space being formed where downward displacement of the seat can be accepted thereinto.

The MT-type straddled vehicle according to (1) includes a frame, a seat, a multi-stage transmission device, an engine, a starter motor, a motor driver, and an electric cable.

The frame includes two seat frames.

The seat is supported by the two seat frames.

The engine is attached to the frame.

The engine includes a cylinder and a crankcase. The cylinder bore for housing the piston such that the piston is able to move reciprocatably is formed in the cylinder. The crankcase is connected to the cylinder and houses the crankshaft and the multi-stage transmission device. As the piston reciprocates, the crankshaft rotates. The rotational speed outputted from the engine is changed by the gear ratio in the multi-stage transmission device.

The starter motor starts the engine. The starter motor is provided at one end part of the crankshaft of the engine. The starter motor is a multiphase brushless motor that also serves as a generator. The engine can be started by the starter motor, and power can be generated by the starter motor after the engine is started.

The motor driver performs switching of the electric current that is to be supplied to the starter motor.

The motor driver is arranged such that at least a part of the motor driver is included within a seat frame space. The motor driver is provided to the two seat frames either directly or through a fixing member, in such a manner that the motor driver is fixed relative to the two seat frames. The seat frame space is defined as a space within the two seat frames when being viewed in the down direction of the MT type straddled vehicle from above, and the seat frame space is formed where downward displacement of the seat can be accepted thereinto.

A crankcase of the MT-type straddled vehicle according to (1) houses a multi-stage transmission device. Accordingly, in the crankcase of the MT-type straddled vehicle of (1), the crankshaft being housed is likely to be larger in size in the radial direction compared to, for example, the case where the continuously variable transmission device provided at the end part of the crankshaft is housed. As a result, available space higher than the crankcase is likely to be limited. However, in the MT-type straddled vehicle according to (1), a starter motor, which is a multiphase brushless motor, is provided at one end part of the crankshaft of the engine and also serves as a generator. Thus, in the MT-type straddled vehicle according to (1) the conventional starter motor specialized for the starting function of the engine is no longer necessary. Conventionally, a starter motor specialized for the starting function is usually provided higher than the crankcase since it drives the crankshaft. That is, in the MT-type straddled vehicle according to (1), the starter motor can be removed from a region higher than the crankcase. Thus, in the MT-type straddled vehicle according to (1), a space where a conventional starter motor specialized for the starting function was previously arranged is made available for the components related to the functioning of the engine to be arranged. The components related to the functioning of the engine include, for example, a chain tensioner, a thermostat, and a throttle valve.

The switching of the electric current that is to be supplied to the starter motor, which is a multiphase brushless motor, is performed by the motor driver. The motor driver also performs switching of the electric current generated by the starter motor. Heat is generated in the motor driver through the electric current. The motor driver of the MT-type straddled vehicle according to (1) is provided to the seat frames of the frame either directly or through a fixing member. At least a part of the motor driver is included in a seat frame space. The seat frame space is within the two seat frames in view of the down direction of the MT-type straddled vehicle from above. The seat frame space is formed where downward displacement of the seat can be accepted thereinto. The form of the seat of the MT-type straddled vehicle is changed, for example, when a driver is seated. When the vehicle is traveling, the air does not remain and is free to flow. Accordingly, the motor driver is likely to be kept radiating the heat through the air, which is likely to suppress any rise in its temperature. Consequently, a function for performing switching of the electric current by the motor driver is less likely to be inhibited. Therefore, any decline in functions of the starter motor can be suppressed. Thus, according to the MT-type straddled vehicle of (1), higher flexibility can be achieved in the arrangement of the frame and components in the region higher than the crankcase while any decline in functions of the starter motor can be suppressed.

According to one aspect of the present teaching, the MT-type straddled vehicle can adopt the following configuration.

(2) The MT type straddled vehicle according to (1),
an electric cable configured to connect the starter motor to the motor driver,
at least a part of the electric cable being provided to at least one of the two seat frames either directly or through a fixing member.

The electric cable that connects the starter motor to the motor driver tends to be thicker than, for example, a cable for communication or a cable only for charging because a plurality of cables for large electric currents are tied together to be the electric cable. At least a part of the electric cable of the MT-type straddled vehicle of (2) is provided to the seat frame either directly or through a fixing member. The electric cable, which tends to be thick, can be supported using the seat frame. As a result, in the MT-type straddled vehicle of (2), it is possible to prevent the electric cable from being an obstacle to the components of the straddled vehicle when maintenance of the vehicle is performed.

According to one aspect of the present teaching, the MT-type straddled vehicle can adopt the following configuration.

(3) The MT type straddled vehicle according to (2),
the starter motor is provided with a motor lead-out part through which the electric cable connected to the motor driver is led out from the starter motor, and the motor lead-out part is arranged such that the electric cable to be led out through the motor lead-out part extends in a direction toward the frame in view of the left-right direction.

As the electric cable is thick in form, it is hard for it to be bent and it is hard for the direction of the electric cable to be changed. According to the MT-type straddled vehicle of (3), the motor lead-out part is arranged so that the electric cable extends in the direction that approaches the frame. Therefore, according to the MT-type straddled vehicle of (3), the electric cable approaches to the frame while the electric cable is not bent and the direction of the electric cable is not changed. In addition, according to the MT-type straddled vehicle of (3), the electric cable that extends from the motor lead-out part of the starter motor can be avoided on the way thereof. Therefore, the electric cable that connects the starter motor to the driver of the MT-type straddled vehicle of (3) can be arranged along the main frame. As a result, it is possible to prevent the electric cable from being an obstacle to the components of the straddled vehicle when maintenance of the vehicle is performed. By removing the starter motor from the region higher than the crankcase and arranging the motor driver at the above-mentioned position, higher flexibility in the arrangement of the components in the region higher than the crankcase can be achieved while any decline in functions of the starter motor can be suppressed.

According to one aspect of the present teaching, the MT-type straddled vehicle can adopt the following configuration.

(4) The MT type straddled vehicle according to (3),
the motor lead-out part is arranged such that the electric cable to be led out through the motor lead-out part extends backward.

According to the MT-type straddled vehicle of (4), the motor lead-out part of the starter motor can be protected from grit, water, etc.

According to one aspect of the present teaching, the MT-type straddled vehicle can adopt the following configuration.

(5) The MT type straddled vehicle according to (3) or (4),
the motor lead-out part is arranged such that the electric cable to be led out through the motor lead-out part extends upward.

According to the MT-type straddled vehicle of (5), since the electric cable led out from the motor lead-out part extends upward toward the motor driver arranged higher than the crankcase, the degree of bending of the electric cable can be reduced.

According to one aspect of the present teaching, the MT-type straddled vehicle can adopt the following configuration.

(6) The MT type straddled vehicle according to any one of (3) to (5),
the motor driver is provided with a driver lead-out part through which the electric cable connected to the starter motor is led out from the motor driver, and the driver lead-out part is arranged such that the electric cable to be led out through the driver lead-out part extends downward.

According to the straddled vehicle of (6), the intrusion of liquid into the motor driver can be suppressed.

According to one aspect of the present teaching, the MT-type straddled vehicle can adopt the following configuration.

(7) The MT type straddled vehicle according to any one of (3) to (6),
the motor lead-out part of the starter motor has a grommet through which the electric cable passes.

According to the straddled vehicle of (7), the motor lead-out part has a grommet through which the electric cable penetrates, so that the waterproof property is high.

According to one aspect of the present teaching, the MT-type straddled vehicle can adopt the following configuration.

(8) The MT type straddled vehicle according to (6),
the driver lead-out part of the motor driver has a grommet through which the electric cable passes.

According to the MT type straddled vehicle of (8), at least one of the motor lead-out part has a grommet through which the electric cable penetrates, so that the waterproof property is high.

According to one aspect of the present teaching, the MT-type straddled vehicle can adopt the following configuration.

(9) The MT type straddled vehicle according to any one of (3) to (8),
the electric cable is clamped to the frame.

According to the MT-type straddled vehicle of (9), the electric cable is clamped to the frame. Therefore, according to the MT-type straddled vehicle of (9), the electric cable can be arranged without interrupting the components of the MT-type straddled vehicle, and higher flexibility can be achieved in the arrangement of other components.

According to one aspect of the present teaching, the MT-type straddled vehicle can adopt the following configuration.

(10) The MT type straddled vehicle according to any one of (3) to (9),
the electric cable has a core made of a conductor, a coating enveloping the core, and a tube covering the coating.

According to the MT-type straddled vehicle of (10), any damage of the electric cable can be easily noticed by inspecting the tube for any signs of damage. Therefore, according to the MT-type straddled vehicle of (10), maintainability can be improved.

According to one aspect of the present teaching, the MT-type straddled vehicle can adopt the following configuration.

(11) The MT type straddled vehicle according to (10),
the coating is made of a material with an achromatic color, while the tube is made of a material with a chromatic color.

According to the MT-type straddled vehicle of (11), the visibility of the motor driver with respect to the electric cable can be improved so that noticing any signs of damage is made easier. As the achromatic coating is covered with the chromatic tube, the visibility of any damage to tube can be improved. Thus, according to the MT-type straddled vehicle of (11), when, for example, components around the electric cable are replaced, the maintainability can be improved because work can be performed without making contact with or damaging the electric cable.

According to one aspect of the present teaching, the MT-type straddled vehicle can adopt the following configuration.

(12) The MT type straddled vehicle according to any one of (1) to (11),
the motor driver has a hexahedral shape so as to include two smallest surfaces, two second smallest surfaces, and two largest surfaces, and is arranged with the largest surfaces opposing the upward and downward directions of the MT type straddled vehicle.

The shape of a part of a planar part of the seat of the MT-type straddled vehicle is changed in the up-down direction when it is seated. Accordingly, a space extending both in the up-down direction and the left-right direction is likely to be created in the region covered with the seat in view of the down direction. According to the MT-type straddled vehicle of (12), the motor driver is formed in a flat hexahedron shape, and each of the widest surfaces thereof opposes the upward and downward directions of the MT-type straddled vehicle. This improves the space efficiency of the arrangement of the motor driver.

According to one aspect of the present teaching, the MT-type straddled vehicle can adopt the following configuration.

(13) The MT type straddled vehicle according to any one of (1) to (12), the starter motor includes a stator and a rotor, the stator including a stator core and windings of plural phases, the stator core having plural teeth circumferentially arranged such that the plural teeth and slots locate alternately, the windings being wound on the teeth, the rotor including a permanent magnet part with magnetic pole faces, the magnetic pole faces being disposed side by side in the circumferential direction so as to oppose the stator with a gap therebetween, the number of the magnetic pole faces being greater than 2/3 of the number of the slots.

According to the MT-type straddled vehicle of (13), the ratio of the number of magnetic pole faces to the number of slots of the starter motor is more than two-thirds. Accordingly, when the starter motor operates as a generator, the temperature increase of the stator winding at the time of high rotation can be suppressed. Therefore, according to the MT-type straddled vehicle of (13), since the starter motor and the motor driver can suppress heat generation, it is possible to suppress the influence of heat on peripheral components. Therefore, according to the MT-type straddled vehicle of (13), higher flexibility in the arrangement of components higher than the crankcase can be achieved. As a result, the MT-type straddled vehicle of (13) can have a more compact body. The ratio of the number of magnetic pole faces to the number of slots satisfying the relationship of "the number of magnetic pole faces greater than 2/3 of the number of slots" may be, for example, 10:12, 8:9, and 4:3, but the ratio is not limited to these examples. The number of magnetic pole faces is preferably 8/9 or more of the number of slots, and preferably more than 8/9. The number of magnetic pole faces is preferably equal to or greater than the number of slots. The number of magnetic pole faces is preferably greater than the number of slots. The number of magnetic pole faces is preferably 4/3 the number of slots. The upper limit of the ratio is not particularly limited, but can be, for example, 4/3.

According to one aspect of the present teaching, the MT-type straddled vehicle can adopt the following configuration.

(14) The MT type straddled vehicle according to (13),
the crankcase is configured such that the inside thereof is lubricated with oil, and
the starter motor includes a rotor without a fan or a fin that produces an air stream for cooling, the starter motor being positioned so as to be in contact with the oil.

According to the MT-type straddled vehicle of (14), the ratio of the number of magnetic pole faces to the number of slots of the starter motor is more than two-thirds. Accordingly, the temperature of the stator winding is not or less likely to be higher than the temperature of the low-viscosity oil. Thus, the heat of the starter motor can be radiated by oil. Therefore, according to the MT-type straddled vehicle of (14), the enlargement of the cooling mechanism can be suppressed or avoided in the starter motor.

According to one aspect of the present teaching, the MT-type straddled vehicle can adopt the following configuration.

(15) The MT type straddled vehicle according to (13),
the starter motor is configured such that:
a cooling air inlet and a cooling air outlet are provided; and
the rotor is provided with a fan or a fin that produces an air stream for cooling, the air stream flowing from the cooling air inlet toward the cooling air outlet.

The MT-type straddled vehicle of (15) has a starter motor of a forced air cooling system. According to the forced air cooling system, the outlet of the cooling air can be disposed separate from the components requiring heat countermeasure. Therefore, according to the MT-type straddled vehicle of (15), the motor driver of the starter motor can be disposed separate from the outlet of the cooling air of the starter motor.

According to one aspect of the present teaching, the MT-type straddled vehicle can adopt the following configuration.

(16) The MT type straddled vehicle according to any one of (13) to (15),
the starter motor is a motor of outer rotor type, and
the rotor of the starter motor has a bottomed cylinder shape connected to the crankshaft at a location between the stator and the cylinder in the left-right direction.

According to the MT-type straddled vehicle of (16), the rotor of the starter motor is arranged closer to the center in the left-right direction than the stator. Therefore, according to the MT-type straddled vehicle of (16), the stator of the starter motor can be arranged on the crankcase cover of the engine. Thus, according to the MT-type straddled vehicle of (16), heat of the starter motor can radiate easily.

According to one aspect of the present teaching, the MT-type straddled vehicle can adopt the following configuration.

(17) The MT type straddled vehicle according to any one of (1) to (16),
the starter motor has a function for assisting an engine output.

According to the MT-type straddled vehicle of (17), since a high temperature can be avioded in the starter motor, the output can be enhanced by using the starter motor for assisting the engine output.

According to one aspect of the present teaching, the MT-type straddled vehicle can adopt the following configuration.

(18) The MT type straddled vehicle according to any one of (1) to (17),
the starter motor has a rotor position detection device that is a pickup coil.

According to the MT-type straddled vehicle of (18), since the rotor position detection device of the starter motor is a coil-type pickup, accurate rotor position detection is possible even when the starter motor reaches a high temperature.

According to one aspect of the present teaching, the MT-type straddled vehicle can adopt the following configuration.

(19) The MT type straddled vehicle according to any one of (1) to (18),
the engine is any one of a single cylinder engine, a parallel multi-cylinder engine, or a V type multi-cylinder engine.

According to the MT-type straddled vehicle of (19), regardless of the number of cylinders of the engine, the canister can be arranged in a region higher than the crankcase in view of the left-right direction. Therefore, according to the MT-type straddled vehicle of (19), higher flexibility in the arrangement of components in the region higher than the crankcase can be achieved regardless of the number of cylinders of the engine.

The terminology used herein is for the purpose of describing particular embodiments only and is not intended to limit the teaching. As used herein, the term "and/or" includes any or all combinations of one or more of the related listed items. As used herein, the use of the term "including" "comprising" or "having" and variations thereof specifies the presence of the described features, steps, operations, elements, components, and/or equivalents thereof, but may include one or more of the steps, operations, elements, components, and/or groups thereof. As used herein, the terms "provided", "connected", "coupled" and/or their equivalents are broadly used and encompass both direct and indirect providing, connecting, and coupling. Further, the "connected" and "coupled" are not restricted to physical or mechanical connections or couplings, but may include direct or indirect electrical connections or couplings. Unless otherwise defined, all terms used herein (including technical and scientific terms) have the same meaning as commonly understood by person skilled in the art to which the teaching belongs. Terms such as those defined in commonly used dictionaries should be interpreted as having a meaning consistent with the meaning in the context of the relevant art and the present disclosure, and will not be interpreted in an idealized or overly formal sense unless explicitly defined herein. It is understood that a plurality of techniques and steps are disclosed in the description of the present teaching. Each of these has an individual advantage, and each can be used with one or more, or in some cases all, of the other disclosed techniques. Accordingly, for the sake of clarity, this description will refrain from unnecessarily repeating all possible combinations of individual steps.

A new MT-type straddled vehicle is described herein. In the following description, for purposes of illustration, numerous specific details are set forth to provide a complete understanding of the present teaching. However, it will be apparent to those skilled in the art that the present teaching can be practiced without these specific details. The present disclosure should be considered as an example of the present teaching, and is not intended to limit the present teaching to the particular embodiments illustrated by the following figures or description.

The frame forms the skeleton of the MT-type straddled vehicle. The frame supports, for example, components of the straddled vehicle such as an engine, a seat, a fuel tank, and a battery. For example, the frame includes at least a main frame. The frame includes, for example, a head pipe, a main frame fixed to the head pipe, and a seat frame fixed to the main frame. The frame may be configured by a head pipe, a main frame and a seat frame, and other components, or may be configured by components other than the head pipe, the main frame and the seat frame. The head pipe, for example, rotatably supports a front fork that supports front wheels. The main frame may constitute to, for example, a single pipe or a combination of pipes. The main frame may constitute to a structure other than a pipe, such as a plate. Examples of the frame include, but are not limited to, a single cradle type, a double cradle type, a diamond type, and a monocoque type. The frame, for example, receives loads from the front and rear wheels. The seat frame is fixed to the main frame and extends backward from the main frame in the front-back direction of the MT-type straddled vehicle. The seat frame is provided with the seat of the MT-type straddled vehicle.

The engine includes, for example, a single-cylinder engine and an engine having two or more cylinders. Functioning of the engine means that the engine outputs the power generated by the combustion of gas as the torque and rotational speed of the crankshaft. The engine is, for example, a four-stroke engine having a high-load region and a low-load region during four strokes. The four-stroke engine having a high-load region and a low-load region during four strokes is, for example, a single-cylinder engine, a two-cylinder engine, an unequal interval combustion-type three-cylinder engine, or an unequal interval combustion-type four-cylinder engine. The four-stroke engine having a high-load region and a low-load region during four strokes has a larger variation in rotation at a lower engine speed than other types of engines. However, the engine may be, for example, a four-stroke engine without a high-load region and a low-load region during four strokes. The high-load region refers to the region of one combustion cycle of the engine where the load torque is higher than the average value of the load torque in one combustion cycle. The low-load region refers to the region other than the high-load region in one combustion cycle. In the engine, the low-load region is wider than, for example, the high-load region when viewed with reference to the rotation angle of the crankshaft. The compression stroke overlaps the high-load region.

The direction of the crankshaft is the left-right direction of the MT-type straddled vehicle.

The multiphase brushless motor is a motor without a commutator. The multiphase brushless motor may be, for example, an outer rotor-type or an inner rotor-type. The multiphase brushless motor may be an axial gap-type instead of a radial gap-type. The multiphase brushless motor functions, for example, as a starter motor for starting an engine. The starter motor is, for example, a generator driven by an engine or drive wheels to generate electricity. The starter motor may be an electric motor that assists the output of the engine.

When the starter motor is provided at one end part of the crankshaft, it is, for example, directly connected to the crankshaft. However, the starter motor is not limited to this, and it is minimally requried that the starter motor is provided so as to be conjunction with the crankshaft. It is minimally required that the starter motor is connected to the crankshaft, for example, without a manual clutch.

The starter motor is, for example, connected with a plurality of electric cables through which power is supplied from the motor driver or power is supplied to the motor driver. When the connection part between the starter motor and the electric cable is arranged in such a manner that the direction in which the electric cable extends from the starter motor is the direction in which the electric cable approaches to the frame in view of the left-right direction, this arrangement means, for example, as follows. In view of the left-right direction, the connection part between the starter motor and the electric cable is arranged within an angle range from minus 45 degrees to plus 45 degrees from the center point of the starter motor with reference to a straight line from the center point of the starter motor to the frame at the shortest distance.

The multi-stage transmission device is configured to change a gear ratio in multiple stages in response to an operation of, for example, the shift pedal. A continuously variable transmission does not correspond to a multi-stage transmission device.

The motor driver has a function for performing switching of power that is to be supplied from the battery to the starter motor and power that is to be supplied from the starter motor to the battery. The motor driver may be integrated with the control device. The control device is, for example, an ECU (engine control unit). The control device may include a processor for executing a program or may be an electronic circuit. However, it is minimally required that the motor driver has a function for performing switching of the electric current flowing between the battery and the multiphase brushless motor. For example, the motor driver may be positioned away from the processor.

The left-right direction of the MT-type straddled vehicle is perpendicular to the front-back direction of the MT-type straddled vehicle. The center line in the left-right direction of the MT-type straddled vehicle is a line extending in the front-back direction through the center of gravity of the MT-type straddled vehicle. The outermost end of the motor driver in the left-right direction is the furthest end from the center line.

When a surface opposes the upward direction, it means, for example, that the surface is perpendicular to the upward direction. However, when the surface is closer to the upward direction than any of the front direction, the back direction, the right direction, and the left direction, it is also included in opposing the upward direction. More specifically, when a surface opposes the upward direction, it includes an arrangement where the perpendicular line of the surface forms an angle of less than 45 degrees with the upward direction.

When the first component is directly provided to the second component, it means that the first component and the second component are provided such that they are in contact. For example, a configuration where the first component and second component are provided to each other by fasteners or adhesives such that they are in contact with each other is referred to a configuration where they are directly provided. A fixing member is a member for fixing two components. The fixing member is not particularly limited and may be, for example, a bracket, a stay, or a band. When the first component is provided to the second component through a plurality of fixing members arranged in series, it corresponds to the configuration where the first component is provided to the second component through the fixing member. For example, when the first component is provided to the second component through a stay and rubber mount, the stay and rubber mount correspond to a plurality of fixing members arranged in series. In addition, when the first component is provided to the second component through a plurality of fixing members arranged in parallel, it corresponds to the configuration where the first component is provided to the second component through fixing members. For example, when the first component is provided to the second component through a plurality of stays provided at different positions, the plurality of stays provided at different positions corresponds to a plurality of fixing members arranged in parallel.

### Effect of the Invention

According to the MT-type straddled vehicle of the present teaching, higher flexibility in the arrangement of both the frame and components in a region higher than the crankcase can be achieved while any decline in functions of the starter motor can be suppressed.

### Brief Description of the Drawings

FIG.1 shows an MT-type straddled vehicle according to an embodiment of the present teaching.
FIG.2 is a left side view showing the straddled vehicle of FIG. 1.
FIG.3 is an enlarged left side view of the engine unit of the straddled vehicle of FIG.1.
FIG.4 is an enlarged cross-sectional view of the engine unit of the straddled vehicle of FIG.1.
FIG.5 is an explanatory diagram schematically showing the relationship between the crank angle position and the required torque of the engine of the straddled vehicle of FIG.1.
FIG.6 is a cross-sectional view showing a cross section perpendicular to the axis of rotation of the multiphase brushless motor of the straddled vehicle of FIG.1.
FIG.7 is an enlarged left side view of the engine unit of the straddled vehicle having a starter motor specialized for a starting function, which is a comparative example of the straddled vehicle of FIG.1.
FIG.8 illustrates an example of the surrounding region X of FIG.3.
FIG.9 is an enlarged left side view of the frame and the engine unit of the straddled vehicle of FIG.1.
FIG.10 is an enlarged top view of the frame and the engine unit of the straddled vehicle of FIG.1.
FIG.11 is a block diagram illustrating an electrical schematic configuration of the engine unit of the straddled vehicle of FIG. 1.

### Description of Embodiments

### [Overall Summary]

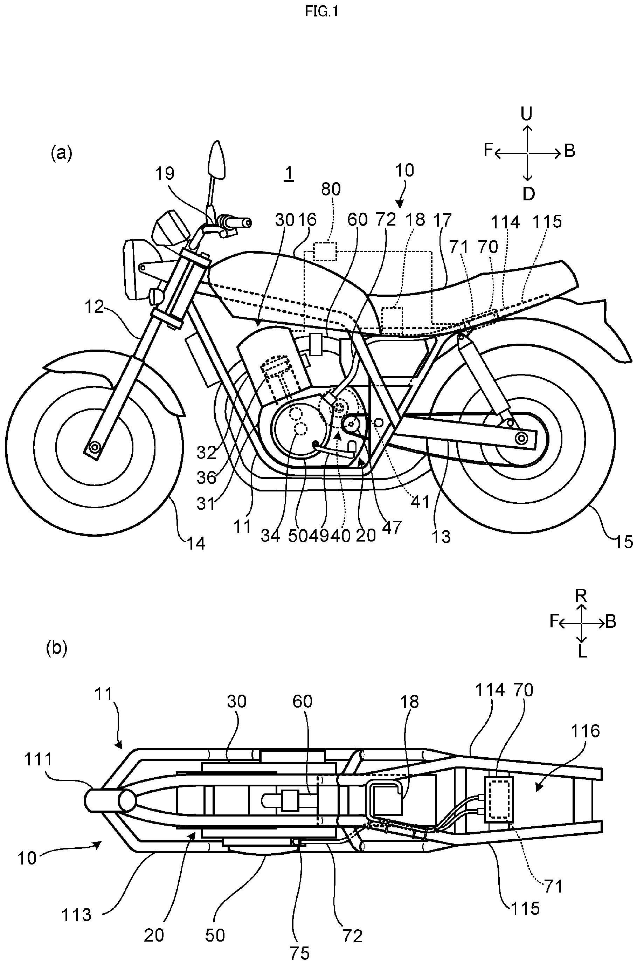

FIG. 1 describes an MT-type straddled vehicle according to an embodiment of the present teaching. FIG.1(a) is a left side view of the straddled vehicle 1, and FIG.1(b) is a top view showing the configuration of the frame 11 and the engine unit 20 of the straddled vehicle 1.

In the present specification and drawings, F denotes forward of the straddled vehicle 1. B denotes backward of the straddled vehicle 1. FB denotes the front-back direction of the straddled vehicle 1. U denotes upward of the straddled vehicle 1. D denotes downward of the straddled vehicle 1. UD denotes the up-down direction of the straddled vehicle 1. L denotes leftward of the straddled vehicle 1. R denotes rightward of the straddled vehicle 1. LR denotes the left-right direction of the straddled vehicle 1. LR also denotes the vehicle width direction of the straddled vehicle 1. That is, the vehicle width direction LR of the straddled vehicle 1 includes both rightward R and leftward L of the straddled vehicle 1. The direction described above is the same as the direction of the engine unit 20 mounted on the straddled vehicle 1.

The straddled vehicle 1 shown in FIG. 1(a) is an MT (manual transmission)-type straddled vehicle having a manual-type multi-stage transmission device. Hereinafter, the MT-type straddled vehicle of the present embodiments will be referred to simply as a straddled vehicle 1. The straddled vehicle 1 includes a vehicle body 10 and an engine unit 20. The vehicle body 10 includes a frame 11, a front fork 12, a rear arm 13, a front wheel 14, and a rear wheel 15.

The frame 11 forms the skeleton of the straddled vehicle 1. As shown in FIG. 1(b), the frame 11 includes at least two seat frames 114 and 115. The front fork 12 is rotatably provided to the frame 11 and rotatably supports the front wheel 14. The rear arm 13 is swingably provided to the frame 11 and rotatably supports the rear wheel 15.

The straddled vehicle 1 includes a fuel tank 16. The fuel tank 16 stores fuel supplied to the engine 30 (described later). The fuel tank 16 supplies fuel to the engine 30. The fuel tank 16 is provided to the frame 11. The straddled vehicle 1 includes a seat 17. The seat 17 is supported by the seat frames 114 and 115 of the frame 11. The fuel tank 16 is arranged frontward of the seat 17 in the front-back direction FB of the straddled vehicle 1.

The straddled vehicle 1 includes a battery 18.

The engine unit 20 includes the engine 30, a manual transmission 40, a multiphase brushless motor (starting generator) 50, and an intake system 60. That is, the straddled vehicle 1 includes the engine 30, the manual transmission 40, the multiphase brushless motor 50, and the intake system 60.

The engine 30 includes a cylinder 32, a piston 36, a crankcase 31, and a crankshaft 34. A cylinder bore for housing the piston 36 such that the piston is able to move reciprocatably is formed in the cylinder 32. The crankcase 31 houses the crankshaft 34 and a manual transmission 40. The crankcase 31 is connected to the cylinder 32. The engine 30 is provided to the frame 11. The engine 30 outputs the power generated by the combustion functioning through the crankshaft 34 that rotates forward.

The manual transmission 40 is a manual-type multi-stage transmission device. The manual transmission 40 is provided in a power transmission pathway between the engine 30 and the rear wheel 15. The manual transmission 40 changes the gear ratio in multiple stages in response to an operation of a driver of the straddled vehicle 1. The driver of the straddled vehicle 1 changes the gear ratio of the manual transmission by operating a shift pedal 49. That is, the manual transmission 40 changes the rotational speed of the engine 30 by the operation of the driver of the straddled vehicle 1 and transmits the change to the rear wheel 15, which is the drive wheel. The manual transmission 40 has a neutral state and a plurality of non-neutral states.

The manual transmission 40 includes a manual clutch 41 and an output part 47. The manual clutch 41 is provided in a power transmission pathway between the engine 30 and the manual transmission 40. A manual clutch lever 19 operates the manual clutch 41 in response to the operation by the driver of the straddled vehicle 1. The driver of the straddled vehicle 1 interrupts power transmission between the engine 30 and the manual transmission 40 through the manual clutch 41.

The multiphase brushless motor 50 is a permanent magnet-type motor. The multiphase brushless motor 50 is provided at one end part of the crankshaft 34. The multiphase brushless motor 50 functions as a starter motor for starting the engine 30 by driving the crankshaft 34 when the engine 30 is started. The multiphase brushless motor 50 is provided so as to be in conjunction with the crankshaft 34. The multiphase brushless motor 50 drives the crankshaft 34 using the power that is supplied from the battery 18. The multiphase brushless motor 50 also serves as a generator that is driven by the engine 30 to generate electricity during the combustion functioning of the engine 30. Providing the engine unit 20 with the multiphase brushless motor 50 that serves as both a starter motor and a generator can eliminate the need for a starter motor such as a dedicated starter motor that is different from the generator.

A crankcase 31 of the straddled vehicle 1 houses a manual transmission 40. Accordingly, in the crankcase 31 of the straddled vehicle 1, the crankshaft 34 being housed is likely to be larger in size in the radial direction compared to, for example, the case where the continuously variable transmission device provided at the end part of the crankshaft is housed. As a result, available space higher than the crankcase 31 is likely to be limited. In addition, a starter motor specialized for the starting function is usually provided higher than the crankcase since it drives the crankshaft. In this embodiment, providing the engine unit 20 with the multiphase brushless motor 50 that serves as both a starter motor and a generator can eliminate the need for a dedicated starter motor that is different from the generator higher than the crankcase 31. Thus, in the straddled vehicle 1, a space where a conventional starter motor specialized for the starting function was previously arranged is made available for the components related to the functioning of the engine 30 to be arranged. The components related to the functioning of the engine 30 include, for example, a chain tensioner, a thermostat, and a throttle valve.

In the straddled vehicle 1, a space where a conventional starter motor specialized for the starting function was previously arranged is made available for the intake system 60 to be arranged. The intake system 60 passes air taken into the engine 30. The intake system 60 is a general term for components protruding from the cylinder 32 of the engine 30.

The straddled vehicle 1 includes a motor driver 70. The motor driver 70 performs switching of the electric current that is to be supplied to the multiphase brushless motor 50. The motor driver 70 has an inverter 71. The inverter 71 controls the electric current flowing between the battery 18 and the multiphase brushless motor 50. The motor driver 70 is arranged such that at least a part of the motor driver overlaps the seat 17 in view of the down direction of the straddled vehicle 1 from above. The motor driver 70 is provided to the seat frames 114 and 115 either directly or through a fixing member.

The switching of the electric current that is to be supplied to the multiphase brushless motor 50 is performed by the motor driver 70. The motor driver 70 also performs switching of the electric current generated by the multiphase brushless motor 50. Heat is generated when the inverter 71 performs switching. The motor driver 70 of the straddled vehicle 1 is arranged so that at least a part of the motor driver 70 is included within the seat frame space 116. The motor driver 70 is provided to the seat frames 114 and 115 of the frame 11 either directly or through a fixing member, in such a manner that the motor driver is fixed relative to the seat frames 114 and 115. Here, the seat frame space 116 is a space within the two seat frames 114 and 115 in view of the down direction of the straddled vehicle 1 from above. The seat frame space 116 is formed where downward D displacement of the seat 17 can be accepted thereinto. The form of the seat 17 of the straddled vehicle is changed when a driver is seated. Accordingly, within the seat frame space 116, air does not remain and is free to flow when the straddled vehicle 1 is traveling. This allows the motor driver 70 to keep radiating the heat, and any rise in the temperature can be suppressed. Thus, a function for performing switching of the electric current by the motor driver 70 is not likely to be inhibited. Therefore, any decline in functions of the multiphase brushless motor 50 can be suppressed.

The straddled vehicle 1 includes a control device 80. The control device 80 controls the rotational power outputted from the engine 30 by controlling the combustion functioning of the engine 30. The control device 80 also controls the motor driver 70. The control device 80 controls the multiphase brushless motor 50 by controlling the inverter 71 of the motor driver 70.

The straddled vehicle 1 includes an electric cable 72. The electric cable 72 connects the multiphase brushless motor 50 to the motor driver 70. At least a part of the electric cable 72 is provided to at least one of the seat frames 114 and 115 directly or through a fixing member. A plurality of cables is tied together to form the electric cable 72 that connects the multiphase brushless motor 50 to the motor driver 70, and therefore the electric cable tends to be thicker than a communication cable. At least a part of the electric cable 72 of the straddled vehicle 1 is provided to at least one of the seat frames 114 and 115 directly or through a fixing member. As a result, the electric cable 72 can be prevented from being an obstacle to the components of the straddled vehicle 1 when maintenance of the vehicle is performed. Accordingly, higher flexibility can be achieved in the arrangement of components in the region higher than the crankcase 31 while any decline in the functions of the multiphase brushless motor 50 can be suppressed.

### [Details of each part]

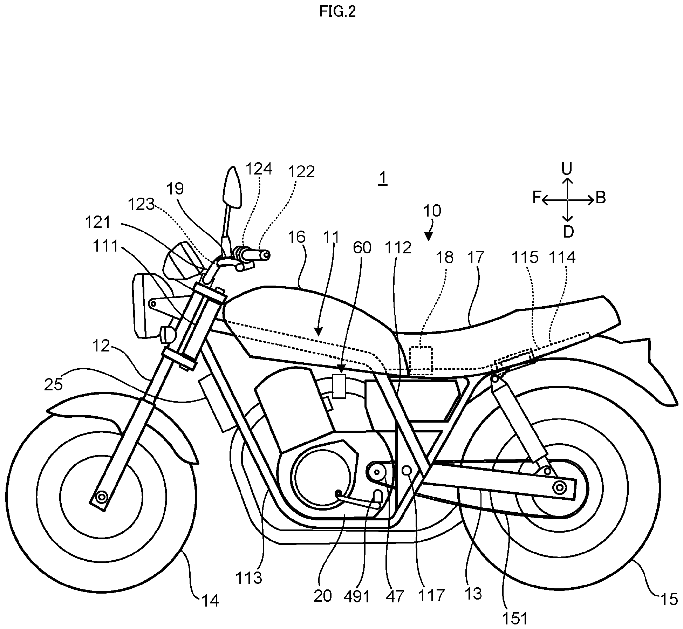

Hereinafter, the straddled vehicle 1 according to an embodiment of the present teaching will be described in more detail. FIG.2 is a left side view of the straddled vehicle 1 shown in FIG.1. More specifically, the straddled vehicle 1 is an MT-type straddled vehicle. The straddled vehicle 1 is also a motorcycle. More specifically, the straddled vehicle 1 is an MT-type motorcycle. More specifically, the straddled vehicle 1 includes a vehicle body 10 and an engine unit 20. The vehicle body 10 includes a frame 11, a front fork 12, a rear arm 13, front wheel 14, rear wheel 15, a fuel tank 16, and a seat 17.

The frame 11 includes a head pipe 111, a main frame 112, a down tube 113, seat frames 114 and 115, and a swing arm pivot 117.

The head pipe 111 rotatably supports the front fork 12. The front fork 12 rotatably supports the front wheel 14. A handlebar 121 is fixed to the upper end of the front fork 12 in the up-down direction UD of the straddled vehicle 1. The handlebar 121 functions as a steering handle. A manual clutch lever 19 is provided on the left part of the handlebar 121 in the left-right direction LR of the straddled vehicle 1. An accelerator operator 122, a brake lever 123, and an engine start switch 124 are provided on the right part of the handlebar 121.

The main frame 112 extends backward B in the front-back direction FB of the straddled vehicle 1 from the head pipe 111. The main frame 112, which is a central portion of the frame 11, supports the engine unit 20 together with the down tube 113. The main frame 112 also supports the fuel tank 16. The down tube 113 extends backward B and downward D in the front-back direction FB and the up-down direction UD of the straddled vehicle 1 from the head pipe 111. The rear end of the main frame 112 and the rear end of the down tube 113 in the front-back direction FB of the straddled vehicle 1 are connected.

The seat frames 114 and 115 are provided at the rear portion of the main frame 112 in the front-back direction FB of the straddled vehicle 1, and extends backward B from the rear portion of the main frame 112. A seat 17 is provided to the seat frames 114 and 115. The seat 17 is a saddle type. The fuel tank 16 and the seat 17 form a part of the upper contour line of the vehicle body 10 when the straddled vehicle 1 is viewed in the left-right direction LR.

The swing arm pivot 117 is provided at a coupling point between the main frame 112 and the down tube 113. The swing arm pivot 117 swingably supports the rear arm 13. The rear arm 13 rotatably supports the rear wheel 15. The rear wheel 15 is drive wheel that receive power outputted from the engine unit 20 and drive the straddled vehicle 1.

The engine unit 20 outputs power from the output part 47 to the rear wheel 15. The output part 47 is a sprocket around which the chain 151 is wound. The output part 47 is provided outside the casing of the engine unit 20. The output part 47 is actually covered with a cover provided on the vehicle body 10 (not shown), but is represented by a solid line in FIG.2 so that it is easily understood that the output part is exposed outside the casing of the engine unit 20. The power of the engine unit 20 is transmitted to the rear wheel 15 through a sprocket and a chain 151 as the output part 47. The casing of the engine unit 20 is provided with a step 491. The driver of the straddled vehicle 1 straddles the seat 17 to sit, and has his or her feet placed on the step 491 while traveling. The battery 18 is arranged inside the vehicle body 10. The battery 18 stores power.

### [Engine Unit]

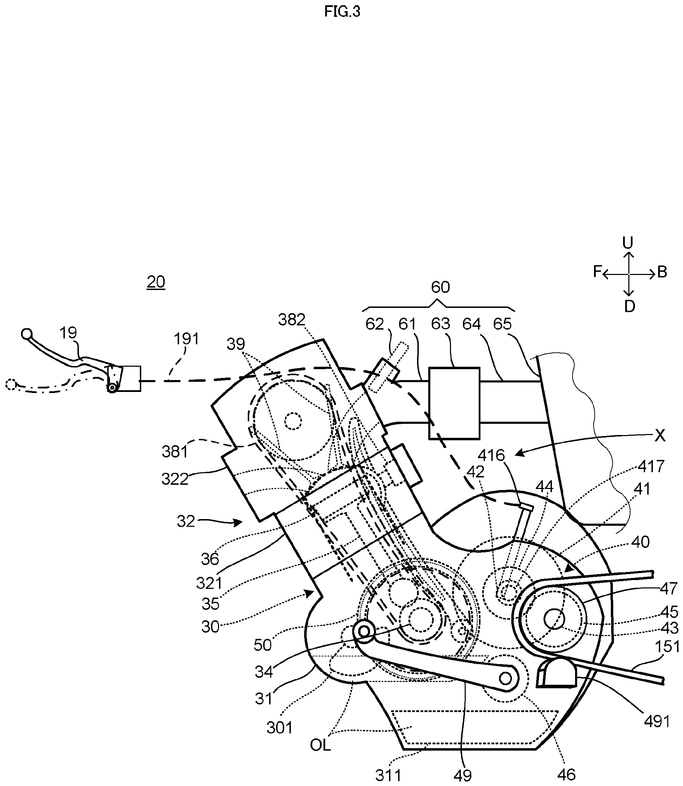

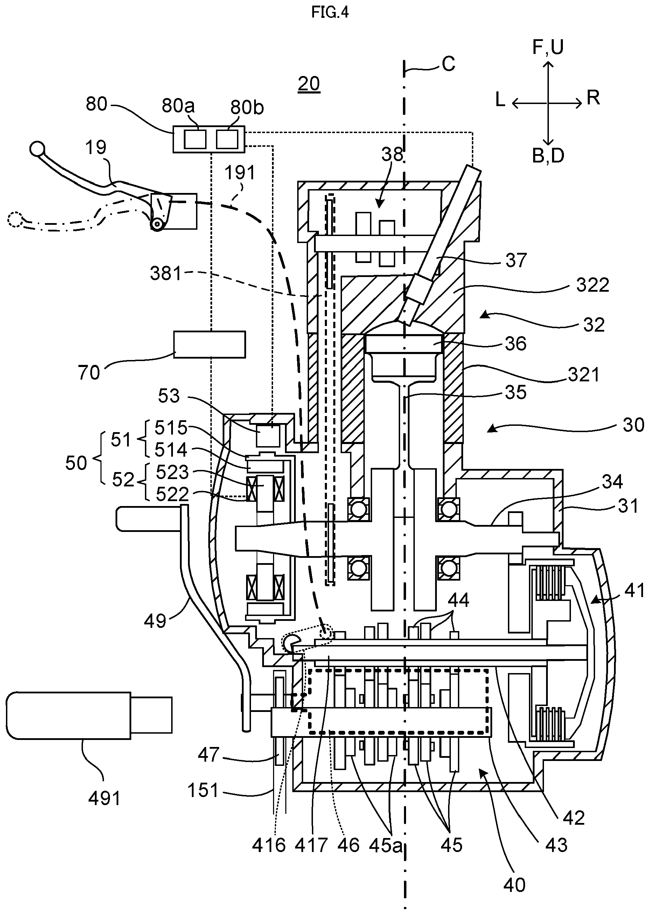

FIG.3 is an enlarged left side view of the engine unit 20 shown in FIG.1. FIG. 4 is an enlarged cross-sectional view of the engine unit 20 shown in FIG.1. The engine unit 20 includes the engine 30, the manual transmission 40, the multiphase brushless motor 50, and the intake system 60. The engine unit 20 also includes a radiator 25 (see FIG.2). That is, the engine 30 is a water-cooled engine.

The engine 30 includes a crankcase 31 and a cylinder 32. The engine 30 includes a crankshaft 34, a connecting rod 35, a piston 36, an spark plug 37 (see FIG.4), a valve functioning mechanism 38 (see FIG.4), and a valve 39.

The crankcase 31 and the cylinder 32 are included in the casing of the engine unit 20. The cylinder 32 includes a cylinder body 321 and a cylinder head 322. The piston 36 is reciprocatably provided in the cylinder body 321. The crankcase 31 is connected to the cylinder body 321.

The engine 30 is provided to the frame 11 so that the cylinder 32 has a standing posture. The term that the cylinder has a standing posture means that the center line of the cylinder bore extends along the vertical direction. The term that the cylinder has a standing posture means that the center line of the cylinder bore extends 'mainly' in the vertical direction. Specifically, the inclination angle of the center line of the cylinder bore in the piston moving direction is between -45 degrees or more and + 45 degrees or less with respect to the vertical.

The crankshaft 34 is arranged in the crankcase 31 and rotatably supported by the crankcase 31. The piston 36 and the crankshaft 34 are connected through the connecting rod 35. The valve 39 and the valve functioning mechanism 38 are arranged in the cylinder head 322.

The crankshaft 34, the manual transmission 40, and the multiphase brushless motor 50 are arranged within the crankcase 31. The power of the crankshaft 34 is transmitted to the valve functioning mechanism 38 through the cam chain 381. The valve functioning mechanism 38 operates the valve 39 in synchronization with the rotation of the crankshaft 34 and the reciprocating motion of the piston 36. The slack of the cam chain 381 is adjusted by a chain tensioner 382.

The engine 30 includes a balancer 301. The balancer 301 is arranged, in the front-back direction FB, forward F of the vertical line passing through the crankshaft line in view of the left-right direction LR.

The crankcase 31 is configured so that the inside thereof is lubricated by the low-viscosity oil OL. That is, the engine 30 has a low-viscosity oil OL. The crankshaft 34, the manual transmission 40, and the multiphase brushless motor 50 are lubricated with the same low-viscosity oil OL. The low-viscosity oil OL lubricates and cools each part of the engine unit 20.

The low-viscosity oil OL is pumped by an oil pump (not shown) and circulated in the engine 30. More specifically, the low-viscosity oil OL is accumulated in an oil pan 311 provided at the lower part of the crankcase 31. The low-viscosity oil OL accumulated in the oil pan 311 is pressurized by the oil pump (not shown). The pressurized low-viscosity oil OL is supplied to the piston 36 and the crankshaft 34 through an oil supply passage (not shown). Such an oil supply passage is formed, for example, by a bore provided inside the crankshaft 34, a bore provided inside the cylinder body 321, and a groove formed on a joint surface between the cylinder body 321 and the cylinder head 322.

The low-viscosity oil OL is also supplied to the manual transmission 40 and the multiphase brushless motor 50. More specifically, the low-viscosity oil OL supplied to the piston 36 also flows to the multiphase brushless motor 50 arranged downward of the piston 36 in the up-down direction UD. The low-viscosity oil OL is accumulated so that a part of the multiphase brushless motor 50 is immersed in the low-viscosity oil OL. For example, the low-viscosity oil OL is accumulated in a dam wall (not shown) provided to surround a part of the multiphase brushless motor 50, so that a part of the multiphase brushless motor 50 is immersed in the low-viscosity oil OL. For example, the low-viscosity oil OL overflowing from the dam wall flows to the oil pan 311. The low-viscosity oil OL adhered to the multiphase brushless motor 50 is diffused into the crankcase 31 by the rotation of the multiphase brushless motor 50.

A part of the low-viscosity oil OL is also supplied to the valve functioning mechanism 38 through the cam chain 381. In this way, the inside of the engine 30 is lubricated with the low-viscosity oil OL. Therefore, the inside of the crankcase 31 is lubricated with the low-viscosity oil OL.

The low-viscosity oil OL is a lubricating oil of which low-temperature viscosity grade according to the SAE viscosity classification specified in SAE J300 is lower than 20 W. The lower the viscosity grade, the lower the viscosity of the oil. The high temperature viscosity grade according to the SAE viscosity classification of the lubricating oil is not particularly limited. When X is an integer that is equal to or greater than 0 and less than 20, and Y is an integer that is equal to or greater than 0, the SAE viscosity grade of the lubricating oil is represented by XW-Y. The lubricating oil is composed of base oil and additives. Roughly speaking, the lower the viscosity of the lubricating oil, the lower the evaporation temperature of the lubricating oil, and the more easily the lubricating oil evaporates. Depending on the type of the base oil (e.g. mineral oil or synthetic oil) and additives, the evaporation temperature may be different even if the viscosity of the lubricating oil is the same. The evaporation characteristics of the lubricating oil can be obtained, for example, by the boiling point distribution measurement method by gas chromatography-simulated distillation in accordance with ASTM D6352.

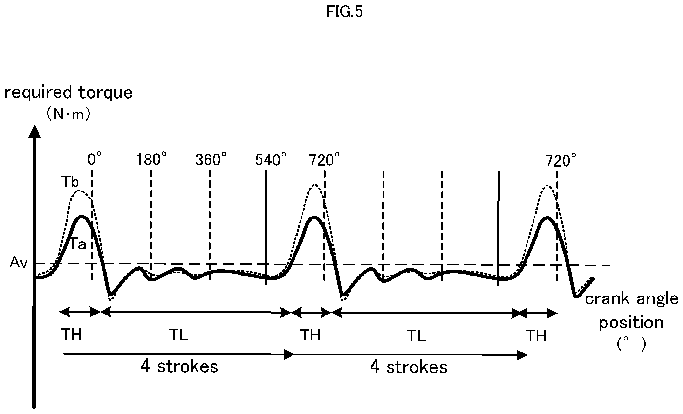

FIG.5 is an explanatory diagram schematically showing the relationship between the crank angle position and the required torque of the engine 30. A solid line Ta in FIG.5 indicates the required torque to rotate the crankshaft 34 in a state where the engine 30 is not performing combustion functioning. The engine 30 is a single cylinder engine. During 4 strokes, the engine 30 has a high-load region TH where a load for rotating the crankshaft 34 is high, and a low-load region TL where a load for rotating the crankshaft 34 is lower than the load in the high-load region TH.

The high-load region refers to a region, in one combustion cycle of the engine 30, in which the load torque is higher than the average value Av of the load torque in one combustion cycle. When viewed with reference to the rotation angle of the crankshaft 34, the low-load region TL is wider than the high-load region TH. More specifically, the low-load region TL is wider than the high-load region TH. In other words, the rotation angle region corresponding to the low-load region TL is wider than the rotation angle region corresponding to the high-load region TH. The engine 30 rotates while repeating an intake stroke, a compression stroke, an expansion stroke (a combustion stroke), and an exhaust stroke. The compression stroke overlaps the high-load region TH. The low-load region TL is located between combustion.

One combustion cycle of the engine 30 includes one intake stroke, one compression stroke, one expansion stroke, and one exhaust stroke. The engine 30 rotates while repeating an intake stroke, a compression stroke, an expansion stroke and an exhaust stroke. In the intake stroke, a mixture of fuel and air is supplied to a combustion chamber defined by a cylinder body 321, a cylinder head 322, and a piston 36 shown in FIGS.3 and 4. In the compression stroke, the piston 36 compresses the air-fuel mixture in the combustion chamber. In the expansion stroke, the mixture ignited by the spark plug 37 burns and pushes the piston 36. In the exhaust stroke, the gas after combustion is discharged from the combustion chamber as an exhaust gas. Reciprocating motion of the piston 36 is converted into rotation of the crankshaft 34. The energy generated by combustion of fuel in engine 30 is outputted to the manual transmission 40 as power of the crankshaft 34.

### [Manual Multi-stage transmission device]

The manual transmission 40 converts the rotational speed of the crankshaft 34 according to the gear shift. The manual transmission 40 is a stepped transmission having a plurality of gear shifts. The manual transmission 40 includes a manual clutch 41, an input shaft 42, an output shaft 43, a drive gear 44, a driven gear 45, a dog ring 45a, a gear shift setting mechanism 46, and an output part 47. The manual transmission 40 converts the rotational speed of the crankshaft 34 by a gear ratio corresponding to the operation of the shift pedal 49 and outputs the converted speed. The shift pedal 49 is operated by the feet of the driver.

The manual clutch 41 interrupts the transmission of power between the engine 30 and the rear wheel 15 (see FIG. 1) in response to the operation of the manual clutch lever 19. More specifically, the manual clutch 41 interrupts the transmission of power between the crankshaft 34 and the input shaft 42. The manual clutch 41 interrupts the transmission of power in response to the operation of the driver to the manual clutch lever 19.

The manual clutch 41 is connected to the manual clutch lever 19 through a mechanical wire 191. More specifically, the manual clutch 41 is connected to the manual clutch lever 19 through the mechanical wire 191, a clutch arm 416, and a lifter rod 417. When the manual clutch lever 19 is operated, the mechanical wire 191, the clutch arm 416 and the lifter rod 417 are displaced. As a result, power transmission is interrupted.

The plurality of drive gears 44 are provided on the input shaft 42 and are configured so as to always rotate together with the input shaft 42. Each of the plurality of drive gears 44 corresponds to each gear shift. The plurality of driven gears 45 are provided on the output shaft 43 and configured so as to be relatively rotatable with the output shaft 43. The dog ring 45a is provided on the output shaft 43 and is configured so as to rotate with the output shaft 43. The plurality of driven gears 45 are configured to be meshable with a corresponding drive gear 44. At least one of the plurality of driven gears 45 is always engaged with the drive gear 44. The output shaft 43 is conjunction with an output part 47 of the engine unit 20. More specifically, the output shaft 43 is fixed to the output part 47. The power transmitted to the output shaft 43 is outputted from the output part 47.

The gear shift setting mechanism 46 is configured to mechanically and selectively effectively set the power transmission from the input shaft 42 to the output shaft 43 through the drive gear 44 and the driven gear 45 related to any one of the gear shifts. The gear shift setting mechanism 46 has a shift cam and a shift fork, which are not shown. When the shift cam rotates in response to the operation of the driver to the shift pedal 49, the shift fork is guided to a cam groove provided in the shift cam to move the dog ring 45a in the axial direction. Each of the driven gear 45 and the dog ring 45a is provided with a dog. For example, when the dog ring 45a moves in the axial direction, the dog provided in each of the driven gear 45 and the dog ring 45a is engaged with each other. This makes the power transmission related to any of the gear shifts effective. In this manner, the manual transmission 40 changes the gear ratio in response to the operation of the driver to the shift pedal 49. The rotational speed of the crankshaft 34 is converted by a gear ratio in accordance with the operation of the shift pedal 49 and outputted from the output part 47.

When the driver operates the shift pedal 49 upward U or downward D by the tip of the left foot placed on the step 491, the shift pedal 49 rotates around the rotation axis. Thus, the gear shift setting mechanism 46 effectively sets the power transmission through the drive gear 44 and the driven gear 45 related to one gear shift.

### [Permanent Magnet-Type Starting Generator]

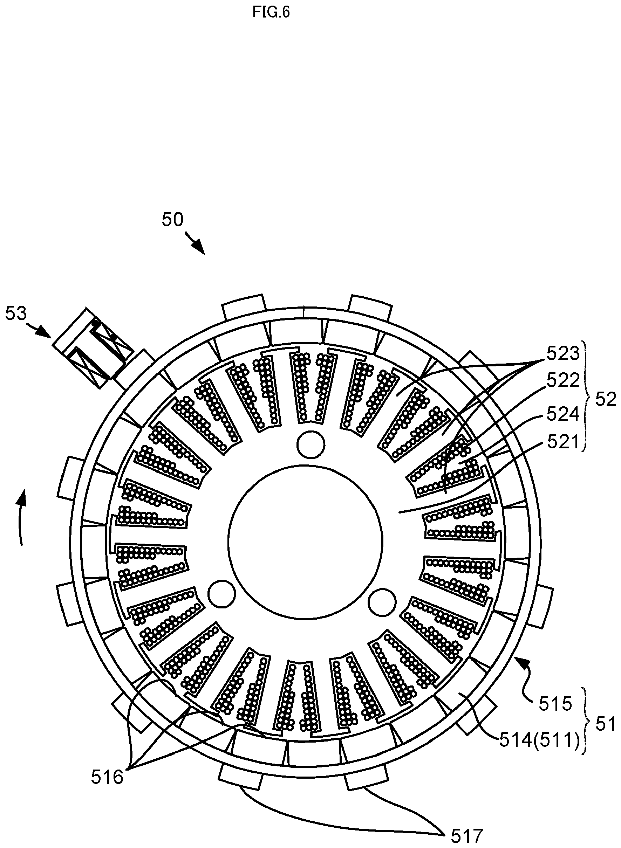

FIG. 6 is a cross-sectional view showing a cross section perpendicular to the axis of rotation of the multiphase brushless motor 50 shown in FIGS.3 and 4. The multiphase brushless motor 50 will now be described with reference to FIGS.3 to 6. The multiphase brushless motor 50 is provided on the crankshaft 34. The multiphase brushless motor 50 is a permanent magnet-type three-phase multiphase brushless motor. The multiphase brushless motor 50 functions as a permanent magnet-type three-phase brushless generator.

The multiphase brushless motor 50 has a rotor 51 and a stator 52. The multiphase brushless motor 50 is a radial gap type. The multiphase brushless motor 50 is an outer rotor type. That is, the rotor 51 is an outer rotor. The stator 52 is an inner stator.

The rotor 51 has a rotor body part 515. The rotor body part 515 is made of, for example, a ferromagnetic material. The rotor 51 has a cylindrical shape with a base connected to the crankshaft 34 between the stator 52 and the cylinder 32 of the engine 30 in the axial direction in which the crankshaft 34 extends. The rotor body part 515 is fixed to the crankshaft 34. The rotor 51 is not provided with a winding to which electric current is supplied. The rotor 51 without a fan or fin that generates airflow for cooling. The rotor 51 is positioned so as to be in contact with the low-viscosity oil OL.

The rotor 51 has a permanent magnet portion 511. The permanent magnet portion 511 opposes the stator 52 through a gap. The rotor 51 has a plurality of magnetic pole parts 514. The plurality of magnetic pole parts 514 are formed of permanent magnet portions 511. The plurality of magnetic pole parts 514 are provided on the inner peripheral surface of the rotor body part 515. The permanent magnet portion 511 is composed of a plurality of permanent magnets. However, the permanent magnet portion 511 can also be composed of one permanent magnet that is magnetized so as to have a plurality of magnetic pole pairs.

The plurality of magnetic pole parts 514 are provided so that N poles and S poles are alternately arranged in the circumferential direction of the multiphase brushless motor 50. The plurality of magnetic pole parts 514 have a magnetic pole face 516 opposing the stator 52. The number of magnetic pole faces of the rotor 51 opposing the stator 52 in the embodiment is twenty-four. The number of magnetic pole faces of the rotor 51 refers to the number of magnetic pole faces opposing the stator 52. No magnetic body is provided between the magnetic pole part 514 (magnetic pole face 516) and the stator 52.

The magnetic pole part 514 is provided outside the stator 52 in the radial direction of the multiphase brushless motor 50.

The stator 52 has a stator core 521 and a plurality of stator windings 522. The stator core 521 has a plurality of teeth 523 provided at intervals in the circumferential direction. The plurality of teeth 523 extend integrally outward in the radial direction from the stator core 521. In this embodiment, a total of eighteen teeth 523 are provided at intervals in the circumferential direction. In other words, the stator core 521 has a total of eighteen slots 524 that are provided at intervals in the circumferential direction. The teeth 523 are arranged at equal intervals in the circumferential direction.

The rotor 51 has more magnetic pole parts 514 than the number of teeth 523. That is, the multiphase brushless motor 50 has more magnetic pole parts 514 than the number of teeth 523. The number of magnetic pole faces is more than two-third of the number of slots. More specifically, the number of pole faces is four-third of the number of slots.

The stator winding 522 is wound around each tooth 523. That is, the multiphase stator windings 522 are provided so as to pass through the slot 524. FIG.6 shows the stator winding 522 in the slot 524. Each of the multiphase stator windings 522 belongs to any one of a U-phase, a V-phase and a W-phase. The stator windings 522 are arranged in the order of, for example, the U-phase, the V-phase, and the W-phase.

The engine unit 20 is provided with a rotor position detection device 53. The rotor position detection device 53 detects the position of the rotor 51. The rotor position detection device 53 is provided at a position where the detected portion 517 opposes the rotor as the rotor 51 rotates. A coil-type pickup is used for the rotor position detection device 53. The rotor position detection device 53 is provided to the crankcase 31 and arranged in a storage space of the multiphase brushless motor 50.

The rotor 51 is provided to the crankshaft 34 without a power transmission mechanism (for example, belts, chains, gears, speed reducers, speed increasers, etc.). The rotor 51 rotates at a speed ratio of 1:1 with respect to the crankshaft 34. More specifically, the rotor 51 is connected to the crankshaft 34 so as to rotate at the same speed as the crankshaft 34. The rotational axis of the multiphase brushless motor 50 substantially matches with the rotational axis of the crankshaft 34. More specifically, the rotor 51 is fixed to the crankshaft 34. More specifically, the rotor 51 is directly connected to the crankshaft 34. This allows the rotor 51 to rotate integrally with the crankshaft 34. The rotation shaft of the multiphase brushless motor 50 is integrated with the crankshaft 34. The multiphase brushless motor 50 receives power even after the engine is started, and drives the crankshaft 34. In this case, the multiphase brushless motor 50 has a function for assisting the engine output of the straddled vehicle 1.

### [Intake System Arrangement]

The intake system 60 includes intake hoses 61 and 64, a fuel injection device 62, a throttle body 63, and an air cleaner 65 (see FIG.3). The intake hose 61 connects an inlet of the cylinder 32 of the engine 30 and the throttle body 63. The fuel injection device 62 is provided to the intake hose 61 and supplies fuel to air flowing into the engine 30. The throttle body 63 adjusts the amount of air flowing into the engine 30. The air cleaner 65 removes dust, unwanted elements and the like from air taken into the engine 30. The intake hose 64 connects the throttle body 63 and the air cleaner 65.

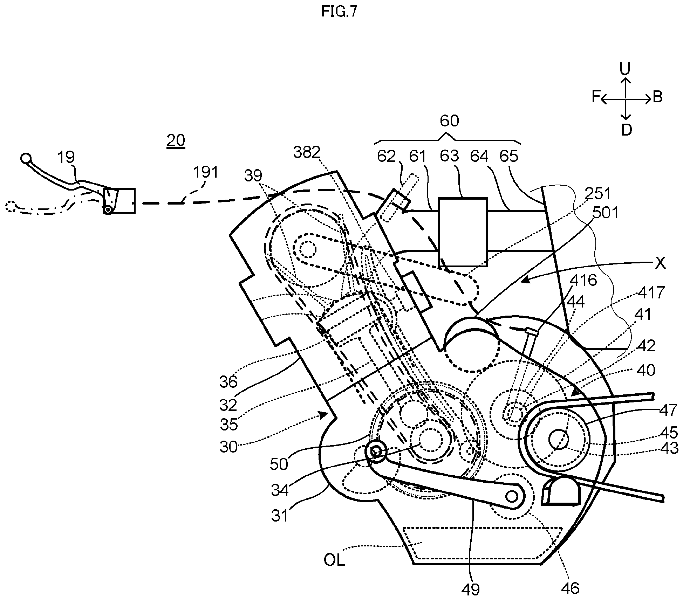

The surrounding region X will now be described with reference to FIGS.3 and 7. FIG.7 is an enlarged left side view of the engine unit of the straddled vehicle having a starter motor specialized for a starting function, which is a comparative example of this embodiment. As shown in FIG.7, which is a comparative example, the starter motor 501 specialized for a starting function is conventionally provided on the upper edge of the crankcase 31 in the surrounding region X in order to drive the crankshaft. In addition to the starter motor 501, a clutch arm 416, a mechanical wire 191, a chain tensioner 382, and the like are arranged in the surrounding region X of the straddled vehicle shown in FIG. 7, which is a comparative example. When the engine 30 is a water-cooled engine, a radiator hose 251 is also arranged. Further, a muffler or the like may be arranged.

In the straddled vehicle 1 of this embodiment, the starter motor 501 can be removed from the surrounding region X. There can be higher flexibility in the arrangement of other components in the surrounding region X, which is a spare space generated by removing the conventional starter motor 501 from the surrounding region X. Thus, in the straddled vehicle 1 of this embodiment, higher flexibility in the arrangement of components related to the functioning of the engine 30 can be achieved using a space where the conventional starter motor 501 specialized for the starting function is arranged. The components related to the functioning of the engine 30 include, for example, a radiator hose, a canister, a chain tensioner, a thermostat, and a throttle valve. Consequently, the straddled vehicle 1 according to this embodiment can achieve higher flexibility in layout of components arranged in the surrounding region X.

In the engine 30, a balancer 301 is arranged forward of the vertical line passing through the crankshaft line in view of the left-right direction LR (see FIG.3). When the balancer 301 is provided in an engine 30, a part of the balancer 301 is projected from the engine 30. According to the straddled vehicle 1, the balancer 301 is arranged forward of the vertical line passing through the crankshaft line in the front-back direction FB. Thus, the balancer 301 is arranged to avoid the surrounding region X. Therefore, the space efficiency of the surrounding region X can be improved in the straddled vehicle 1.

More specifically, the surrounding region X is, for example, a region surrounded by an upper contour of the crankcase 31, a rear contour of the cylinder 32, and a lower contour of the intake system 60. When there is a region enclosed by each contour, the region corresponds to the surrounding region X. When there is a plurality of enclosed regions, each region corresponds to the surrounding region X.

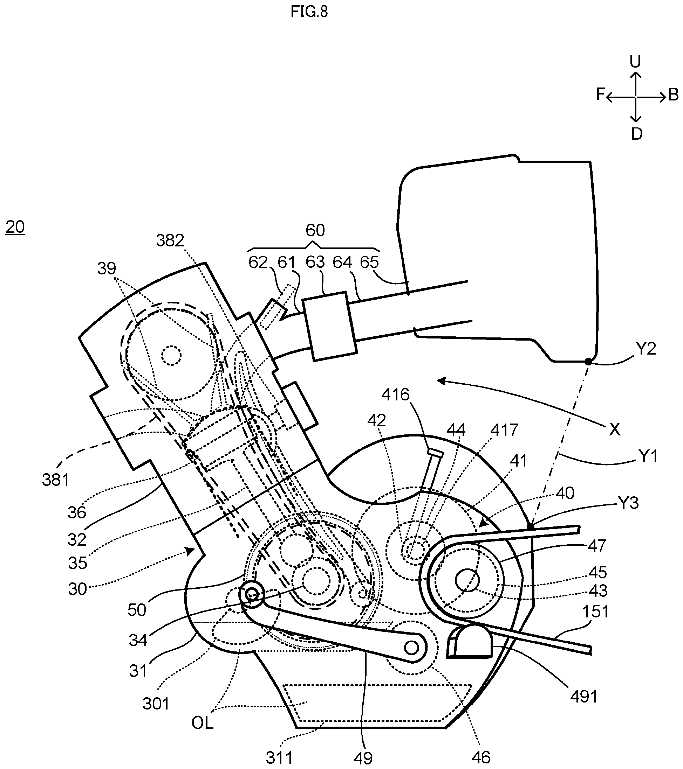

FIG.8 is a diagram for explaining an example of the surrounding region X shown in FIG.3. As shown in FIG.8, with respect to the surrounding region X, when there are no regions enclosed by the respective contours, there is an opening that partially opens, and therefore the surrounding region can be defined by connecting both ends of the opening with a line Y1. Since the intake system 60 and the cylinder 32 are connected, and since the cylinder 32 and the crankcase 31 are connected, there may be the opening, for example, between the intake system 60 and the crankcase 31. In this case, one end Y2 of the opening is located on the contour line of the intake system 60, and the other end Y3 of the opening is located on the contour line of the crankcase 31. The surrounding region X can be defined by connecting one end Y2 and the other end Y3 of the opening with a line Y1. In this case, both ends of the opening are determined, for example, so that the surrounding region X becomes widest.

The straddled vehicle 1 includes the motor driver 70 and the control device 80. The motor driver 70 performs switching of the electric current that is to be supplied to the multiphase brushless motor 50. The motor driver 70 has an inverter 71. The inverter 71 controls the electric current flowing between the battery 18 and the multiphase brushless motor 50. The control device 80 controls the rotational power outputted from the engine 30 by controlling the combustion functioning of the engine 30. The control device 80 also controls the motor driver 70. The control device 80 controls the multiphase brushless motor 50 by controlling the inverter 71 of the motor driver 70.

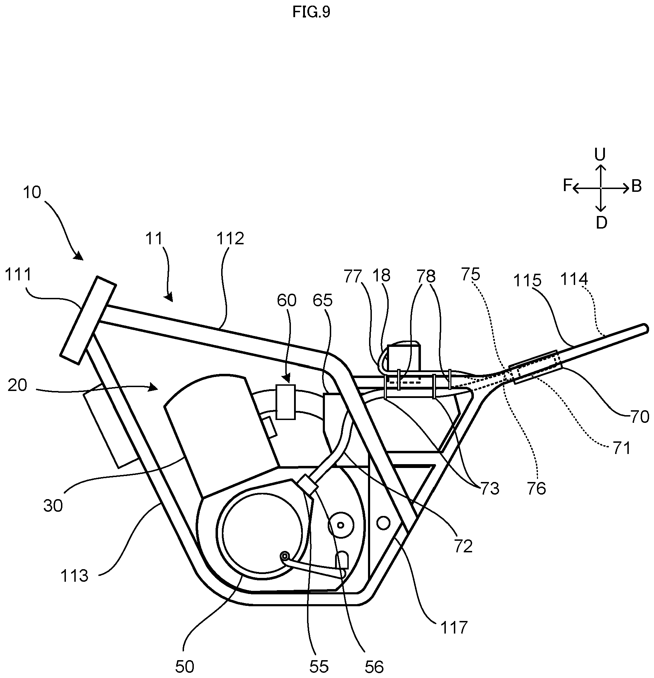

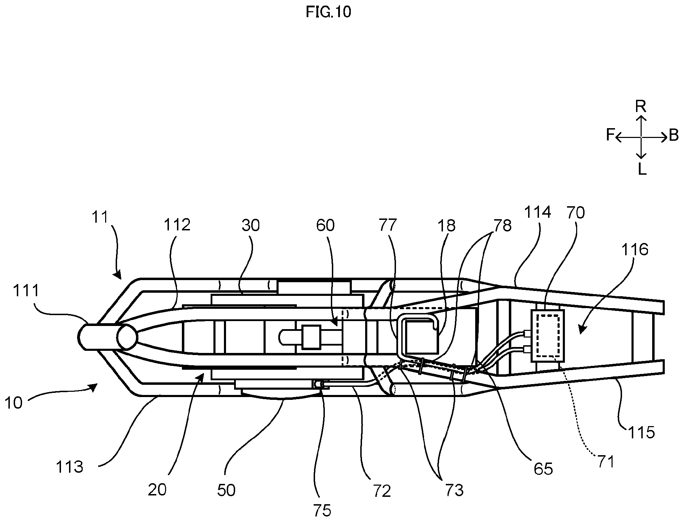

FIG. 9 is an enlarged left side view of the frame 11 and the engine unit 20 of the straddled vehicle 1 in FIG. 1. FIG. 10 is an enlarged top view of the frame 11 and the engine unit 20 of the straddled vehicle 1 in FIG.1. As shown in FIG.9, the motor driver 70 is arranged such that at least a part of the motor driver 70 overlaps the seat 17 in view of the down direction D of the straddled vehicle 1. The motor driver 70 is provided to the seat frames 114 and 115 either directly or through a fixing member.

The multiphase brushless motor 50 has a function as a starter motor in addition to a function as a generator. The multiphase brushless motor 50 is directly connected to the crankshaft 34. Therefore, it is required that the multiphase brushless motor 50 generates a torque large enough to rotate the crankshaft 34 at the time of starting. The motor driver 70 controls the multiphase brushless motor 50 by performing switching of the electric current that is to be supplied to the multiphase brushless motor 50. Accordingly, the motor driver controlling the multiphase brushless motor 50 generates heat when driving the multiphase brushless motor 50. Therefore, it is required that the motor driver 70 radiates the heat generated during driving.

A space to accept the change in a shape of the seat 17 is provided in a region covered with the seat 17 in view of the down direction D of the straddled vehicle 1. Accordingly, the motor driver 70 is likely to be kept radiating the heat through the air, which is likely to suppress any rise in its temperature.

The motor driver 70 has a shape of a hexahedron with the narrowest surfaces, the second narrowest surfaces, and the widest surfaces. In this case, the motor driver 70 is arranged such that each of the widest surfaces thereof opposes the upward U and downward D directions of the straddled vehicle. The shape of a part of a planar part of the seat 17 of the straddled vehicle 1 is usually changed in the up-down direction UD when it is seated. Accordingly, a space extending both in the up-down direction UD and the left-right LR direction is likely to be created in the region covered with the seat 17 in view of the down direction D. By arranging the motor driver 70 such that each of the widest surfaces of the motor driver opposes the upward and downward directions of the MT-type straddled vehicle, the space efficiency of the arrangement of the motor driver 70 can be improved.

The multiphase brushless motor 50 of the engine unit 20 and the motor driver 70 are connected by an electric cable 72. The electric cable 72 has a core wire formed of a conductor, a coating surrounding the core wire, and a tube further covering the coating. With this configuration of the electric cable 72, the damage of the electric cable 72 can be easily noticed by inspecting the damage of the tube. The coating is formed of an achromatic material, and the tube is formed of a chromatic material. The tube that is formed of a chromatic material can increase the visibility of the motor driver 70 with respect to the electric cable 72 and facilitates the ability to notice any damage. Further, since the achromatic coating of the electric cable 72 is covered with the chromatic tube, the visibility of damage to the tube is increased. Thus, in the straddled vehicle 1, work can be performed without contacting or damaging the electric cable 72 when, for example, components around the electric cable 72 are replaced. Therefore, maintainability can be improved in the straddled vehicle 1.

In this embodiment, the electric cable 72 extends along the seat frame 115. At least a part of the electric cable 72 is provided to the seat frame 115 either directly or through a fixing member. The electric cable 72 connects the multiphase brushless motor 50 and the motor driver 70. Accordingly, a cable thicker than, for example, a communication cable is used as the electric cable 72. By providing at least a part of the electric cable 72 to the seat frame 115 either directly or through a fixing member, the electric cable 72 can be arranged so as not to interfere with other components of the straddled vehicle 1 by utilizing the space around the frame 11. Therefore, higher flexibility in the arrangement of the components can be achieved. The electric cable 72 is clamped to the frame 11, more specifically, to the main frame 112 and the seat frame 115 by a fastener 73. When the electric cable 72 is clamped to the main frame 112 and the seat frame 115, the electric cable 72 can be arranged without interfering with the components of the straddled vehicle 1, and higher flexibility in the arrangement of other components can be achieved.

The multiphase brushless motor 50 includes a motor lead-out part 55 through which the electric cable 72 connected to the motor driver 70 is led out from the multiphase brushless motor 50. The motor lead-out part 55 is arranged such that the electric cable 72 led out from the motor lead-out part 55 extends in a direction approaching to the frame 11, or more specifically, to the main frame 112 in view of the left-right direction LR. As the electric cable 72 is thickly formed, it is hard to be bent and the direction of the electric cable is hard to be changed. By arranging the motor lead-out part 55 so that the electric cable 72 extends in the direction approaching to the main frame 112, the electric cable 72 approaches to the main frame 112 while the electric cable is not bent and the direction of the electric cable is not changed. In addition, the electric cable 72 extending from the motor lead-out part 55 of the multiphase brushless motor 50 can be avoided from being bent on the way thereof.

The motor lead-out part 55 is arranged so that the electric cable 72 led out from the motor lead-out part 55 extends backward. The motor lead-out part 55 is also arranged so that the electric cable 72 led out from the motor lead-out part 55 extends upward. By arranging the motor lead-out part 55 of the multiphase brushless motor 50 in this manner, the motor lead-out part 55 is protected from grit, water, etc. Further, by arranging the motor lead-out part 55 in this manner, the electric cable 72 led out from the motor lead-out part 55 extends upward toward the motor driver 70 arranged higher than the crankcase 31. Thus, the degree of bending of the electric cable 72 can be reduced.

The motor driver 70 includes a driver lead-out part 75 through which the electric cable 72 connected to the multiphase brushless motor 50 is led out from the motor driver 70. The driver lead-out part 75 is arranged so that the electric cable 72 led out from the driver lead-out part 75 extends downward. By arranging the motor driver 70 in this manner, the motor driver 70 can suppress the intrusion of liquid.

The motor lead-out part 55 of a multiphase brushless motor 50 has a grommet 56 through which the electric cable 72 penetrates. The driver lead-out part 75 of the motor driver 70 has a grommet 76 through which the electric cable 72 penetrates. The motor lead-out part 55 and the driver lead-out part 75 have grommets (56 and 76) through which the electric cable 72 penetrates, so that they are highly waterproof.

### [Electrical Configuration]

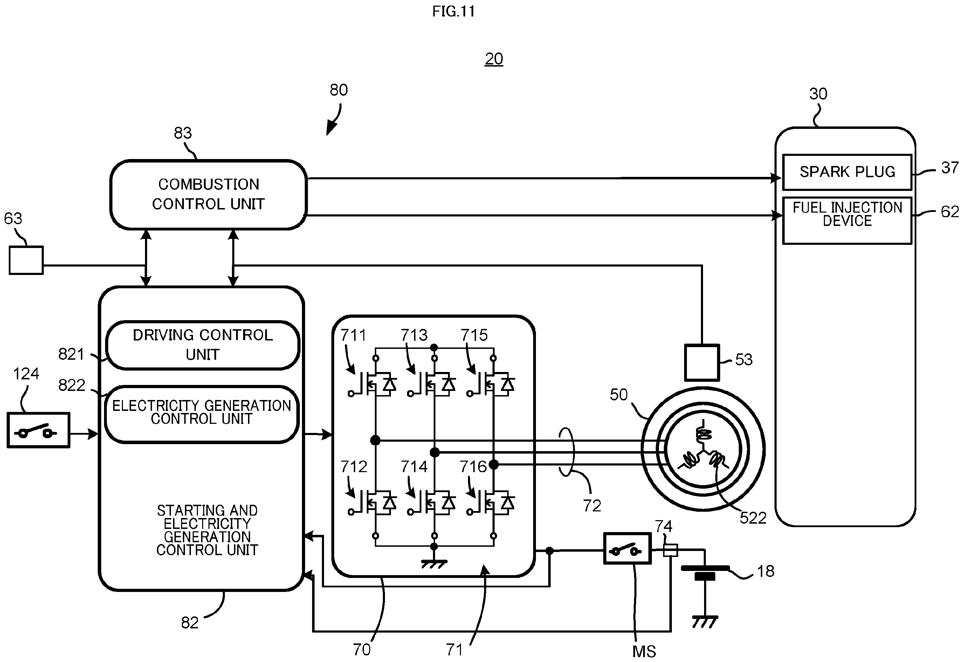

FIG. 11 is a block diagram showing an electrical schematic configuration of the engine unit 20 shown in FIGS.3 and 4. FIG. 11 also shows a battery 18 and a main switch MS, which are electrically connected to the engine unit 20.

The multiphase brushless motor 50 and the battery 18 are connected to the motor driver 70. The battery 18 supplies power to the multiphase brushless motor 50 when the multiphase brushless motor 50 operates as a motor.

The motor driver 70 includes the inverter 71. The inverter 71 controls the electric current flowing between the battery 18 and the multiphase brushless motor 50. The inverter 71 includes a plurality of switching parts 711 to 716. The inverter 71 is a three-phase bridge inverter.

Each of the switching parts 711 to 716 has a switching element. The switching element is, for example, a transistor, and more specifically, an FET (Field Effect Transistor).

The plurality of switching parts 711 to 716 are connected to each phase of the multiphase stator winding 522. More specifically, among the plurality of switching parts 711 to 716, a half bridge is configured by two switching parts connected in series. Half bridges of each phase are connected in parallel to the battery 18. The switching parts 711 to 716 constituting to the half bridge of each phase is connected to each phase of the multiphase stator winding 522.

The inverter 71 controls the electric current flowing between the battery 18 and the multiphase brushless motor 50. More specifically, the switching parts 711 to 716 of the inverter 71 switches the passage/interruption of the electric current between the battery 18 and the multiphase stator winding 522.

More specifically, when the multiphase brushless motor 50 functions as a motor, energization and stop of energization of each of the multiphase stator winding 522 are switched by the on-off functioning of the switching parts 711 to 716.

When the multiphase brushless motor 50 functions as a generator, the passage/interruption of the electric current between each of the stator windings 522 and the battery 18 is switched by the on-off functioning of the switching parts 711 to 716. The switching parts 711 to 716 are sequentially switched on and off to perform rectification and voltage control of the three-phase alternating current outputted from the multiphase brushless motor 50. The switching parts 711 to 716 controls the electric current outputted from the multiphase brushless motor 50 to the battery 18.

The control device 80 includes a combustion control unit 83 and a starting and electricity generation control unit 82. The starting and electricity generation control unit 82 of the control device 80 controls the motor driver 70. A spark plug 37, a fuel injection device 62, and the battery 18 are connected to the control device 80. The rotor position detection device 53 is connected to the control device 80. The control device 80 obtains the position of the rotor 51 in the multiphase brushless motor 50 by a signal from the rotor position detection device 53. The control device 80 controls the inverter 71 according to the position of the rotor 51.

The control device 80 includes the starting and electricity generation control unit 82 and the combustion control unit 83. The starting and electricity generation control unit 82 and the combustion control unit 83 of the control device 80 control the engine 30 and the multiphase brushless motor 50.

The starting and electricity generation control unit 82 includes a driving control unit 821 and an electricity generation control unit 822. The driving control unit 821 starts the engine 30. The driving control unit 821 controls the motor driver 70 so that the multiphase brushless motor 50 rotates the crankshaft 34. The multiphase brushless motor 50 rotates the crankshaft 34 to start the engine 30. The electricity generation control unit 822 causes the multiphase brushless motor 50 to perform power generation functioning. The electricity generation control unit 822 controls the motor driver 70 so that the multiphase brushless motor 50 generates power. The multiphase brushless motor 50 generates power to charge the battery 18.

The driving control unit 821 and the electricity generation control unit 822, i.e., the starting and electricity generation control unit 82, control the functioning of the multiphase brushless motor 50 by controlling the on/off functioning of the switching parts 711 to 716 of the motor driver 70. The starting and electricity generation control unit 82 determines the position of the rotor 51 of the multiphase brushless motor 50 by a change in an electric signal outputted from the rotor position detection device 53. The starting and electricity generation control unit 82 controls the switching parts 711 to 716 based on the position of the rotor 51. This allows the starting and electricity generation control unit 82 to control the rotation of the multiphase brushless motor 50. The starting and electricity generation control unit 82 turns the switching parts 711 to 716 on and off not at a predetermined timing but according to the position of the rotor 51 detected by the rotor position detection device 53. That is, the starting and electricity generation control unit 82 turns the switching parts 711 to 716 on and off by feedback control based on the position of the rotor 51.

The combustion control unit 83 controls the combustion functioning of the engine 30 by controlling the spark plug 37 and the fuel injection device 62. The combustion control device 83 controls the rotational force of the engine 30 by controlling the spark plug 37 and the fuel injection device 62. The combustion control unit 83 controls the spark plug 37 and the fuel injection device 62 according to the opening of the throttle valve SV.

As shown in FIG.4, the control device 80 includes a central processing device 80a and a computer having a storage device 80b. The central processing device 80a performs arithmetic processing based on the control program. The storage device 80b stores data related to programs and operations.

The starting and electricity generation control unit 82 including the driving control unit 821 and the electricity generation control unit 822 and the combustion control unit 83 are implemented by the central processing device 80a and a control program stored in the storage device 80b and executed by the central processing device 80a. Therefore, the functioning of the starting and electricity generation control unit 82 including the driving control unit 821 and the electricity generation control unit 822 and the functioning of the combustion control unit 83 can be regarded as the functioning of the control device 80. It should be noted that the starting and electricity generation control unit 82 and the combustion control unit 83 may be, for example, configured to be positioned separately from each other as separate devices or may be configured integrally.

The battery 18 is charged by electric power generated by the multiphase brushless motor 50. The main switch MS switches supply or stop of supply of power to the control device 80 in response to the operation of the driver. The engine start switch 124 is operated by the driver of the straddled vehicle 1 when the engine 30 is started.

### [Variations]

As another variation, the low-viscosity oil OL may not be supplied to the multiphase brushless motor 50. In this case, the crankcase 31 is provided with a cooling air inlet and a cooling air outlet for the multiphase brushless motor 50. The rotor 51 of the multiphase brushless motor includes a fan or fin for generating airflow for cooling directed from the cooling air inlet to the cooling air outlet. The engine 30 may also be a multi-cylinder parallel engine or a multi-cylinder V-type engine.

### Reference signs list

- 1: straddled vehicle
- 10: vehicle body
- 11: frame
- 12: front fork
- 13: rear arm
- 14: front wheel
- 15: rear wheel
- 16: fuel tank
- 17: seat
- 18: battery
- 20: engine unit
- 25: radiator
- 30: engine
- 31: crankcase
- 32: cylinder
- 34: crankshaft
- 36: piston
- 40: manual transmission
- 41: manual clutch
- 42: input shaft
- 43: output shaft
- 50: multiphase brushless motor
- 60: intake system
- 65: air cleaner
- 70: motor driver
- 80: control device

## Claims

1. An MT, manual transmission, type straddled vehicle (1), the MT type straddled vehicle (1) comprising:
a frame (11) including two seat frames (114, 115);
a seat (17) supported by the two seat frames (114, 115);
a multi-stage transmission device (40) configured to change a gear ratio in multiple stages in response to an operation;
an engine (30) including a crankshaft (34), a piston (36), a cylinder (32), and a crankcase (31), the crankshaft (34) extending in a left-right direction (LR) of the MT type straddled vehicle (1), the cylinder (32) having a cylinder bore in which the piston (36) is reciprocably accommodated, the crankcase (31) being connected to the cylinder (32) and storing the crankshaft (34) and the multi-stage transmission device (40), the engine (30) being attached to the frame (11);
a starter motor (50) configured to start the engine (30);
and
a motor driver (70) configured to perform switching of a current to be supplied to the starter motor (50);
the starter motor (50) being provided to one end portion of the crankshaft (34), the starter motor (50) being a multi-phase brushless motor that serves also as a generator that is configured to generate electricity by being driven by the engine (30),
the motor driver (70) being provided to the two seat frames (114, 115) either directly or through a fixing member, in such a manner that the motor driver (70) is fixed relative to the two seat frames (114, 115), **characterized in that** at least a part of the motor driver (70) is included within a seat frame space (116), the seat frame space (116) being defined as a space within the two seat frames (114, 115) in view of the down direction of the MT type straddled vehicle (1), the seat frame space (116) being formed where downward displacement of the seat (17) can be accepted thereinto.

2. The MT type straddled vehicle (1) according to claim 1, further comprising
an electric cable (72) configured to connect the starter motor (50) to the motor driver (70),
at least a part of the electric cable (72) being provided to at least one of the two seat frames (114, 115) either directly or through a fixing member.

3. The MT type straddled vehicle (1) according to claim 1, wherein
the starter motor (50) is provided with a motor lead-out part (55) through which the electric cable (72) connected to the motor driver (70) is led out from the starter motor (50), and the motor lead-out part (55) is arranged such that the electric cable (72) to be led out through the motor lead-out part (55) extends in a direction toward the frame (11) in view of the left-right direction (LR).

4. The MT type straddled vehicle (1) according to claim 3, wherein
the motor lead-out part (55) is arranged such that the electric cable (72) to be led out through the motor lead-out part (55) extends backward.

5. The MT type straddled vehicle (1) according to claim 3 or 4, wherein
the motor lead-out part (55) is arranged such that the electric cable (72) to be led out through the motor lead-out part (55) extends upward.

6. The MT type straddled vehicle (1) according to any one of claims 3 to 5, wherein
the motor driver (70) is provided with a driver lead-out part (75) through which the electric cable (72) connected to the starter motor (50) is led out from the motor driver (70), and the driver lead-out part (75) is arranged such that the electric cable (72) to be led out through the driver lead-out part (75) extends downward.

7. The MT type straddled vehicle (1) according to any one of claims 3 to 6, wherein
the motor lead-out part (55) of the starter motor (50) has a grommet (56) through which the electric cable (72) passes.

8. The MT type straddled vehicle (1) according to claim 6, wherein
the driver lead-out part (75) of the motor driver (70) has a grommet (76) through which the electric cable (72) passes.

9. The MT type straddled vehicle (1) according to any one of claims 3 to 8, wherein
the electric cable (72) is clamped to the frame (11).

10. The MT type straddled vehicle (1) according to any one of claims 3 to 9, wherein
the electric cable (72) has a core made of a conductor, a coating enveloping the core, and a tube covering the coating.

11. The MT type straddled vehicle (1) according to claim 10, wherein
the coating is made of a material with an achromatic color, while the tube is made of a material with a chromatic color.

12. The MT type straddled vehicle (1) according to any one of claims 1 to 11, wherein
the motor driver (70) has a hexahedral shape so as to include two smallest surfaces, two second smallest surfaces, and two largest surfaces, and is arranged with the largest surfaces opposing the upward and downward directions of the MT type straddled vehicle (1).

13. The MT type straddled vehicle (1) according to any one of claims 1 to 12, wherein
the starter motor (50) includes a stator (52) and a rotor (51), the stator (52) including a stator core (521) and windings (522) of plural phases, the stator core (521) having plural teeth (523) circumferentially arranged such that the plural teeth (523) and slots (524) locate alternately, the windings (522) being wound on the teeth (523), the rotor (51) including a permanent magnet part (511) with magnetic pole faces (516), the magnetic pole faces (516) being disposed side by side in the circumferential direction so as to oppose the stator (52) with a gap therebetween, the number of the magnetic pole faces (516) being greater than 2/3 of the number of the slots (524).

14. The MT type straddled vehicle (1) according to claim 13, wherein
the crankcase (31) is configured such that the inside thereof is lubricated with oil, and
the starter motor (50) includes a rotor (51) without a fan or a fin that produces an air stream for cooling, the starter motor (50) being positioned so as to be in contact with the oil.

15. The MT type straddled vehicle (1) according to claim 13, wherein
the starter motor (50) is configured such that:
a cooling air inlet and a cooling air outlet are provided; and
the rotor (51) is provided with a fan or a fin that produces an air stream for cooling, the air stream flowing from the cooling air inlet toward the cooling air outlet.

16. The MT type straddled vehicle (1) according to any one of claims 13 to 15, wherein
the starter motor (50) is a motor of outer rotor type, and
the rotor (51) of the starter motor (50) has a bottomed cylinder shape connected to the crankshaft (34) at a location between the stator (52) and the cylinder (32) in the left-right direction (LR).

17. The MT type straddled vehicle (1) according to any one of claims 1 to 16, wherein
the starter motor (50) has a function for assisting an engine output.

18. The MT type straddled vehicle (1) according to any one of claims 1 to 17, wherein
the starter motor (50) has a rotor position detection device (53) that is a pickup coil.

19. The MT type straddled vehicle (1) according to any one of claims 1 to 18, wherein
the engine (30) is any one of a single cylinder engine, a parallel multi-cylinder engine, or a V type multi-cylinder engine.

## Patentansprüche

1. Ein Handschaltung-, MT,-Typ-Spreizsitzfahrzeug (1), wobei das MT-Typ-Spreizsitzfahrzeug (1) folgende Merkmale aufweist:
einen Rahmen (11), der zwei Sitzrahmen (114, 115) umfasst;
einen Sitz (17), der von den zwei Sitzrahmen (114, 115) gestützt wird;
eine Mehrstufengetriebevorrichtung (40), die dazu konfiguriert ist, ein Übersetzungsverhältnis in mehreren Stufen ansprechend auf eine Betätigung zu ändern;
einen Verbrennungsmotor (30), der eine Kurbelwelle (34), einen Kolben (36), einen Zylinder (32) und ein Kurbelgehäuse (31) umfasst, wobei sich die Kurbelwelle (34) in einer Links-Rechts-Richtung (LR) des MT-Typ-Spreizsitzfahrzeugs (1) erstreckt, wobei der Zylinder (32) eine Zylinderbohrung aufweist, in der der Kolben (36) wechselseitig bewegbar aufgenommen ist, wobei das Kurbelgehäuse (31) mit dem Zylinder (32) verbunden ist und die Kurbelwelle (34) und die Mehrstufengetriebevorrichtung (40) beherbergt, wobei der Verbrennungsmotor (30) an dem Rahmen (11) angebracht ist;
einen Startermotor (50), der dazu konfiguriert ist, den Verbrennungsmotor (30) zu starten; und
einen Motortreiber (70), der dazu konfiguriert ist, ein Umschalten eines Stromes, der dem Startermotor (50) zuzuführen ist, auszuführen;
wobei der Startermotor (50) an einem Endabschnitt der Kurbelwelle (34) bereitgestellt ist, wobei der Startermotor (50) ein bürstenloser Mehrphasenmotor ist, der auch als Generator dient, welcher dazu konfiguriert ist, über den Antrieb durch den Verbrennungsmotor (30) Elektrizität zu erzeugen,
wobei der Motortreiber (70) an den zwei Sitzrahmen (114, 115) entweder direkt oder durch eine Befestigungsbauglied derart angebracht ist, dass der Motortreiber (70) relativ zu den zwei Sitzrahmen (114, 115) befestigt ist, **dadurch gekennzeichnet, dass** zumindest ein Teil des Motortreibers (70) innerhalb eines Sitzrahmenraumes (116) enthalten ist, wobei der Sitzrahmenraum (116) als ein Raum innerhalb der zwei Sitzrahmen (114, 115) bei Betrachtung in einer Abwärtsrichtung des MT-Typ-Spreizsitzfahrzeugs (1) definiert ist, wobei der Sitzrahmenraum (116) dort gebildet ist, wo eine Abwärtsverschiebung des Sitzes (17) in denselben hinein akzeptiert werden kann.

2. Das MT-Typ-Spreizsitzfahrzeug (1) gemäß Anspruch 1, das ferner Folgendes aufweist:
ein elektrisches Kabel (72), das dazu konfiguriert ist, den Startermotor (50) mit dem Motortreiber (70) zu verbinden,
wobei zumindest ein Teil des elektrischen Kabels (72) an zumindest einem der zwei Rahmen (114, 115) entweder direkt oder durch ein Befestigungsbauglied bereitgestellt ist.

3. Das MT-Typ-Spreizsitzfahrzeug (1) gemäß Anspruch 1, wobei
der Startermotor (50) mit einem Motorausgangsteil (55) versehen ist, durch das das elektrische Kabel (72), das mit dem Motortreiber (70) verbunden ist, aus dem Startermotor (50) herausgeführt wird, und das Motorausgangsteil (55) derart angeordnet ist, dass das elektrische Kabel (72), das durch das Motorausgangsteil (55) herauszuführen ist, sich in einer Richtung hin zu dem Rahmen (11) bei Betrachtung in der Links-Rechts-Richtung (LR) erstreckt.

4. Das MT-Typ-Spreizsitzfahrzeug (1) gemäß Anspruch 3, wobei
das Motorausgangsteil (55) derart angeordnet ist, dass sich das elektrische Kabel (72), das durch das Motorausgangsteil (55) herauszuführen ist, nach hinten erstreckt.

5. Das MT-Typ-Spreizsitzfahrzeug (1) gemäß Anspruch 3 oder 4, wobei
das Motorausgangsteil (55) derart angeordnet ist, dass sich das elektrische Kabel (72), das durch das Motorausgangsteil (55) herauszuführen ist, nach oben erstreckt.

6. Das MT-Typ-Spreizsitzfahrzeug (1) gemäß einem der Ansprüche 3 bis 5, wobei
der Motortreiber (70) mit einem Treiberausgangsteil (75) versehen ist, durch das das elektrische Kabel (72), das mit dem Startermotor (50) verbunden ist, aus dem Motortreiber (70) herausgeführt wird, und das Treiberausgangsteil (75) derart angeordnet ist, dass sich das elektrische Kabel (72), das durch das Treiberausgangsteil (75) herauszuführen ist, nach unten erstreckt.

7. Das MT-Typ-Spreizsitzfahrzeug (1) gemäß einem der Ansprüche 3 bis 6, wobei
das Motorausgangsteil (55) des Startermotors (50) eine Tülle (56) aufweist, durch die das elektrische Kabel (72) verläuft.

8. Das MT-Typ-Spreizsitzfahrzeug (1) gemäß Anspruch 6, wobei
das Treiberausgangsteil (75) des Motortreibers (70) eine Tülle (76) aufweist, durch die das elektrische Kabel (72) verläuft.

9. Das MT-Typ-Spreizsitzfahrzeug (1) gemäß einem der Ansprüche 3 bis 8, wobei
wobei das elektrische Kabel (72) an den Rahmen (11) geklemmt ist.

10. Das MT-Typ-Spreizsitzfahrzeug (1) gemäß einem der Ansprüche 3 bis 9, wobei
wobei das elektrische Kabel (72) einen Kern, der aus einem Leiter besteht, eine Beschichtung, die den Kern umhüllt, und ein Rohr aufweist, das die Beschichtung abdeckt.

11. Das MT-Typ-Spreizsitzfahrzeug (1) gemäß Anspruch 10, wobei
die Beschichtung aus einem Material mit einer achromatischen Farbe besteht, während das Rohr aus einem Material mit einer chromatischen Farbe besteht.

12. Das MT-Typ-Spreizsitzfahrzeug (1) gemäß einem der Ansprüche 1 bis 11, wobei
wobei der Motortreiber (70) eine hexaedrische Form aufweist, so dass derselbe zwei kleinste Oberflächen, zwei zweitkleinste Oberfläche und zwei größte Oberflächen umfasst, und derselbe so angeordnet ist, dass die größten Oberflächen der Aufwärts- und der Abwärtsrichtung des MT-Typ-Spreizsitzfahrzeugs (1) gegenüberliegen.

13. Das MT-Typ-Spreizsitzfahrzeug (1) gemäß einem der Ansprüche 1 bis 12, wobei
der Startermotor (50) eine Stator (52) und einen Rotor (51) aufweist, wobei der Stator (52) einen Statorkern (521) und Wicklungen (522) mehrerer Phasen umfasst, wobei der Statorkern (521) mehrere Zähne (523) aufweist, die umfangsmäßig derart angeordnet sind, dass die mehreren Zähne (523) und Schlitze (524) abwechselnd angeordnet sind, wobei die Wicklungen (522) auf die Zähne (523) gewickelt sind, wobei der Rotor (51) ein Permanentmagnetteil (511) mit Magnetpolflächen (516) umfasst, wobei die Magnetpolflächen (516) in der Umfangsrichtung nebeneinander angeordnet sind, um dem Stator (52) mit einem Zwischenraum dazwischen gegenüberzuliegen, wobei die Anzahl der Magnetpolflächen (516) größer als 2/3 der Anzahl der Schlitze (524) ist.

14. Das MT-Typ-Spreizsitzfahrzeug (1) gemäß Anspruch 13, wobei
das Kurbelgehäuse (31) derart konfiguriert ist, dass das Innere desselben mit Öl geschmiert wird, und
der Startermotor (50) einen Rotor (51) ohne einen Ventilator oder eine Lamelle, der beziehungsweise die einen Luftstrom zur Kühlung erzeugt, umfasst, wobei der Startermotor (50) so positioniert ist, dass derselbe mit dem Öl in Kontakt steht.

15. Das MT-Typ-Spreizsitzfahrzeug (1) gemäß Anspruch 13, wobei
der Startermotor (50) derart konfiguriert ist, dass:
ein Kühllufteinlass und ein Kühlluftauslass bereitgestellt sind; und
der Rotor (51) mit einem Ventilator oder einer Lamelle versehen ist, der beziehungsweise die einen Luftstrom zur Kühlung erzeugt, wobei der Luftstrom von dem Kühllufteinlass hin zu dem Kühlluftauslass strömt.

16. Das MT-Typ-Spreizsitzfahrzeug (1) gemäß einem der Ansprüche 13 bis 15, wobei
der Startermotor (50) ein Motor vom Außenrotortyp ist, und
der Rotor (51) des Startermotors (50) eine mit Boden versehene Zylinderform aufweist, die mit der Kurbelwelle (34) an einer Stelle zwischen dem Stator (52) und dem Zylinder (32) in der Links-Rechts-Richtung (LR) verbunden ist.

17. Das MT-Typ-Spreizsitzfahrzeug (1) gemäß einem der Ansprüche 1 bis 16, wobei
der Startermotor (50) eine Funktion zur Unterstützung einer Verbrennungsmotorausgabe aufweist.

18. Das MT-Typ-Spreizsitzfahrzeug (1) gemäß einem der Ansprüche 1 bis 17, wobei
der Startermotor (50) eine Rotorpositionsdetektionsvorrichtung (53) aufweist, welche eine Sondenspule ist

19. Das MT-Typ-Spreizsitzfahrzeug (1) gemäß einem der Ansprüche 1 bis 18, wobei
der Verbrennungsmotor (30) ein Einzylinder-Verbrennungsmotor, ein Parallel-Mehrzylinder-Verbrennungsmotor oder ein V-Typ-Mehrzylinder-Verbrennungsmotor ist.

## Revendications

1. Véhicule à selle de type à MT, transmission manuelle (1), le véhicule à selle de type à MT (1) comprenant:
un châssis (11) comprenant deux cadres de siège (114, 115);
un siège (17) supporté par les deux cadres de siège (114, 115);
un dispositif de transmission à étages multiples (40) configuré pour modifier un rapport de transmission en de multiples étages en réponse à un actionnement;
un moteur (30) comportant un vilebrequin (34), un piston (36), un cylindre (32) et un carter (31), le vilebrequin (34) s'étendant dans une direction gauche-droite (LR) du véhicule à selle de type à MT (1), le cylindre (32) présentant un alésage de cylindre dans lequel le piston (36) est logé de manière à pouvoir se déplacer en va-et-vient, le carter (31) étant connecté au cylindre (32) et stockant le vilebrequin (34) et le dispositif de transmission à étages multiples (40), le moteur (30) étant fixé au châssis (11);
un moteur de démarrage (50) configuré pour faire démarrer le moteur (30); et
un pilote de moteur (70) configuré pour effectuer une commutation d'un courant à alimenter vers le moteur de démarrage (50);
le moteur de démarrage (50) étant prévu à une partie d'extrémité du vilebrequin (34), le moteur de démarrage (50) étant un moteur multi-phase sans balais qui sert également de générateur qui est configuré pour générer de l'électricité en étant entraîné par le moteur (30),
le pilote de moteur (70) étant prévu sur les deux cadres de siège (114, 115), soit directement, soit par l'intermédiaire d'un élément de fixation, de manière telle que le pilote de moteur (70) soit fixe par rapport aux deux cadres de siège (114, 115),
**caractérisé par le fait qu'**au moins une partie du pilote de moteur (70) est incluse dans un espace de cadre de siège (116), l'espace de cadre de siège (116) étant défini comme un espace à l'intérieur des deux cadres de siège (114, 115) en vue dans la direction vers le bas du véhicule à selle de type à MT (1), l'espace du cadre de siège (116) étant formé à l'endroit où peut être accepté le déplacement vers le bas du siège (17).

2. Véhicule à selle de type à MT (1) selon la revendication 1, comprenant par ailleurs
un câble électrique (72) configuré pour connecter le moteur de démarrage (50) au pilote de moteur (70),
au moins une partie du câble électrique (72) est prévue à au moins un des deux cadres de siège (114, 115), soit directement, soit par l'intermédiaire d'un élément de fixation.

3. Véhicule à selle de type à MT (1) selon la revendication 1, dans lequel
le moteur de démarrage (50) est pourvu d'une partie de sortie de moteur (55) à travers laquelle le câble électrique (72) connecté au pilote de moteur (70) est sorti du moteur de démarrage (50), et la partie de sortie de moteur (55) est disposée de sorte que le câble électrique (72) à sortir à travers la partie de sortie de moteur (55) s'étende dans une direction vers le châssis (11) en vue dans la direction gauche-droite (LR).

4. Véhicule à selle de type à MT (1) selon la revendication 3, dans lequel
la partie de sortie de moteur (55) est disposée de sorte que le câble électrique (72) à sortir à travers la partie de sortie de moteur (55) s'étende vers l'arrière.

5. Véhicule à selle de type à MT (1) selon la revendication 3 ou 4, dans lequel
la partie de sortie de moteur (55) est disposée de sorte que le câble électrique (72) à sortir à travers la partie de sortie de moteur (55) s'étende vers le haut.

6. Véhicule à selle de type à MT (1) selon l'une quelconque des revendications 3 à 5, dans lequel
le pilote de moteur (70) est pourvu d'une partie de sortie de pilote (75) à travers laquelle le câble électrique (72) connecté au moteur de démarrage (50) est sorti du pilote de moteur (70), et la partie de sortie de pilote (75) est disposée de sorte que le câble électrique (72) à sortir à travers la partie de sortie de pilote (75) s'étende vers le bas.

7. Véhicule à selle de type à MT (1) selon l'une quelconque des revendications 3 à 6, dans lequel
la partie de sortie de moteur (55) du moteur de démarrage (50) présente un passe-câble (56) à travers lequel passe le câble électrique (72).

8. Véhicule à selle de type à MT (1) selon la revendication 6, dans lequel
la partie de sortie de pilote (75) du pilote de moteur (70) présente un passe-câble (76) à travers lequel passe le câble électrique (72).

9. Véhicule à selle de type à MT (1) selon l'une quelconque des revendications 3 à 8, dans lequel
le câble électrique (72) est serré contre le châssis (11).

10. Véhicule à selle de type à MT (1) selon l'une quelconque des revendications 3 à 9, dans lequel
le câble électrique (72) présente un noyau formé d'un conducteur, un revêtement enveloppant le noyau et un tube recouvrant le revêtement.

11. Véhicule à selle de type à MT (1) selon la revendication 10, dans lequel
le revêtement est réalisé en un matériau de couleur achromatique, tandis que le tube est réalisé en un matériau de couleur chromatique.

12. Véhicule à selle de type à MT (1) selon l'une quelconque des revendications 1 à 11, dans lequel
le pilote de moteur (70) présente une forme hexaédrique de manière à inclure deux surfaces les plus petites, deux surfaces les deuxièmes plus petites et deux surfaces les plus grandes, et est disposé avec les surfaces les plus grandes opposées aux directions vers le haut et vers le bas du véhicule à selle de type à MT (1).

13. Véhicule à selle de type à MT (1) selon l'une quelconque des revendications 1 à 12, dans lequel
le moteur de démarrage (50) comporte un stator (52) et un rotor (51), le stator (52) comportant un noyau de stator (521) et des enroulements (522) de plusieurs phases, le noyau de stator (521) présentant plusieurs dents ( 523) disposées en circonférence de sorte que les plusieurs dents (523) et fentes (524) soient situées en alternance, les enroulements (522) étant enroulés sur les dents (523), le rotor (51) comportant une partie à aimant permanent (511) avec des faces de pôle magnétique (516), les faces de pôle magnétique (516) étant disposées côte à côte dans la direction circonférentielle de manière à être opposées au stator (52) avec un espace entre elles, le nombre de faces de pôle magnétique (516) étant supérieur à 2/3 du nombre des fentes (524).

14. Véhicule à selle de type à MT (1) selon la revendication 13, dans lequel
le carter (31) est configuré de sorte que son intérieur soit lubrifié avec de l'huile, et
le moteur de démarrage (50) comporte un rotor (51) sans ventilateur ni ailette qui produit un flux d'air pour le refroidissement, le moteur de démarrage (50) étant positionné de manière à être en contact avec l'huile.

15. Véhicule à selle de type à MT (1) selon la revendication 13, dans lequel
le moteur de démarrage (50) est configuré de sorte que:
une entrée d'air de refroidissement et une sortie d'air de refroidissement soient prévues; et
le rotor (51) est pourvu d'un ventilateur ou d'une ailette qui produit un flux d'air pour le refroidissement, le flux d'air circulant de l'entrée d'air de refroidissement vers la sortie d'air de refroidissement.

16. Véhicule à selle de type à MT (1) selon l'une quelconque des revendications 13 à 15, dans lequel
le moteur de démarrage (50) est un moteur du type à rotor extérieur, et
le rotor (51) du moteur de démarrage (50) présente une forme de cylindre à fond connecté au vilebrequin (34) à un endroit entre le stator (52) et le cylindre (32) dans la direction gauche-droite (LR).

17. Véhicule à selle de type à MT (1) selon l'une quelconque des revendications 1 à 16, dans lequel
le moteur de démarrage (50) présente une fonction pour assister une puissance du moteur.

18. Véhicule à selle de type à MT (1) selon l'une quelconque des revendications 1 à 17, dans lequel
le moteur de démarrage (50) présente un dispositif de détection de position de rotor (53) qui est une bobine de capteur.

19. Véhicule à selle de type MT (1) selon l'une quelconque des revendications 1 à 18, dans lequel
le moteur (30) est l'un quelconque parmi un moteur monocylindre, d'un moteur multicylindre parallèle ou d'un moteur multicylindre de type "V".
